# EUROPEAN PATENT APPLICATION

(11) **EP 3 418 408 A1**
(43) Date of publication of application: **26.12.2018**
(21) Application number: 17753178.7
(22) Date of filing: 14.02.2017
(51) Int. Cl.: C22C 21/00, B23K 35/22, B23K 35/28, C22F 1/04, C22F 1/043, C22F 1/053, C22F 1/00

(54) **ALUMINUM ALLOY BRAZING SHEET, MANUFACTURING METHOD THEREFOR, AND MANUFACTURING METHOD FOR VEHICLE HEAT EXCHANGER USING SAID BRAZING SHEET**

(30) Priority: 17.02.2016 JP 2016028434
(71) Applicant: UACJ Corporation, Tokyo 100-0004 (JP)
(72) Inventor: KONDO Toshiya, Tokyo 100-0004 (JP); ANDO Makoto, Tokyo 100-0004 (JP); SHOJI Tomohiro, Tokyo 100-0004 (JP); KUMAGAI Hidetoshi, Tokyo 100-0004 (JP)
(74) Representative: v. Bezold & Partner Patentanwälte - PartG mbB
(86) International application number: PCT/JP2017/005376
(87) International publication number: WO 2017/141921

(57) **Abstract**

An aluminum alloy brazing sheet, a manufacturing method therefor, and a manufacturing method for an automotive heat exchanger. The aluminum alloy brazing sheet includes an aluminum alloy core material, a first brazing material that is clad to one surface of the core material, and a second brazing material that is clad to the other surface of the core material. The core material, the first brazing material, and the second brazing material each include a respective prescribed aluminum alloy. A count of an Al-Si-Fe intermetallic compound having an equivalent circle diameter of 0.5 to 80.0 µm in the second brazing material is less than or equal to 2,000 particles per mm².

## Description

### Technical Field

The present disclosure relates to an aluminum alloy brazing sheet having excellent corrosion resistance and a manufacturing method for the aluminum alloy brazing sheet, and particularly relates to an aluminum alloy brazing sheet that is used with advantage to construct a heat exchanger such as an oil cooler, and a manufacturing method for the aluminum alloy brazing sheet. Further, the present disclosure relates to a manufacturing method of an automotive heat exchanger using this aluminum alloy brazing sheet.

### Background Art

Due to aluminum alloys having the properties of light weight and high thermal conductivity, and the ability to achieve high corrosion resistance by suitable processing, aluminum alloys are used in automotive heat exchangers such as radiators, condensers, evaporators, heaters, intercoolers, and oil coolers. A flow channel shaped component of the automotive heat exchanger uses a core material made of an Al-Mn type alloy such as 3003 alloy, and clads two layers of clad material by cladding on one surface an Al-Si type alloy brazing material and cladding an Al-Zn type alloy sacrificial anode material, and further cladding three layers of clad material on another surface an Al-Si type alloy brazing material. Normally such clad material and corrugation-shaped fins are assembled, and the components of the heat exchanger are joined by brazing at a high temperature greater than or equal to 580°C.

In the presence of a liquid that is corrosive toward one surface or both surfaces of the flow channel shaped component of this heat exchanger, pitting occurs, the flow channel shaped component is penetrated by pitting, or pressure resistance declines due to decreased plate thickness due to uniform corrosion, and such pitting-corrosion may destroy the flow channel shaped component. Thus the air, cooling water, coolant, oil, or the like circulating in the interior of the flow channel shaped component may leak out. To counter this problem, a technique is utilized that, although cladding the sacrificial anode material to the interior surface, does not clad the sacrificial anode material to the exterior surface, and that adds Zn or the like to the flow channel shaped component to lower the potential to a value lower than that of the fin material and use the sacrificial anode effect of the fins. This type of technique can be used on the outer surface because the fluid does not leak out even when the fin is penetrated, and because of the high electrical conductivity of the adhering corrosive liquid. Electrical conductivity of the corrosive liquid increases with increased content of ingredients of the liquid. Due to attachment of corrosive liquid including at high concentration dissolved substances such as snow-melting salt in the exterior corrosion environment of the radiator, electrical conductivity of such corrosive liquid is high, and corrosion over the entire flow channel shaped component can be prevented by the sacrificial effect of the fins.

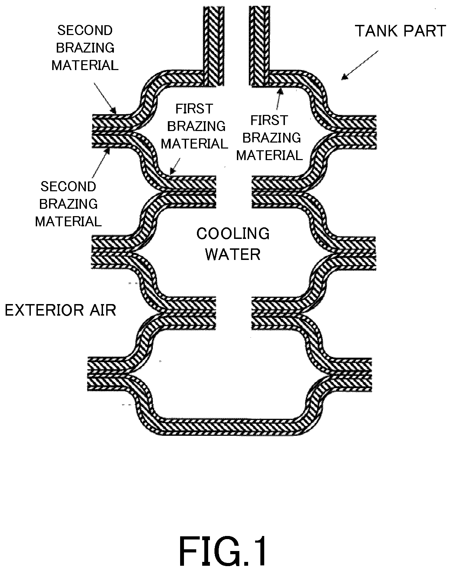

The structure of automobiles in recent years is more complex, and in order to improve mounting-ability of components, there is increasing demand for heat exchangers that have non-conventional shapes. A case of application of a stacked-type structure such as that illustrated in FIG. 1 for a radiator is considered as an example. For the tank part in this case, one surface of the flow channel shaped component contacts the cooling water, and the other surface contacts the exterior air. The surface contacting the cooling water has the same corrosive environment as that of the conventional radiator, cladding of material having a sacrificial anode effect is required, and a brazing function is required due to the need for brazing together the flow channel shaped component members. Further, Zn becomes concentrated at the brazed portion, and the pitting potential at this Zn-concentrated portion becomes lower than that of the brazing material surface. As a result, a problem arises in that corrosion occurs preferentially at this Zn-concentrated portion, and thus the pitting potentials of the contacting portion and the brazing material surface require optimization in order to suppress preferential corrosion. However, due to the presence of fins at parts other than the tank part, the tank part contacting the exterior air requires a brazing function for brazing to the fins. Further, depending on the installation location, corrosion resistance with respect to the exterior air may be required.

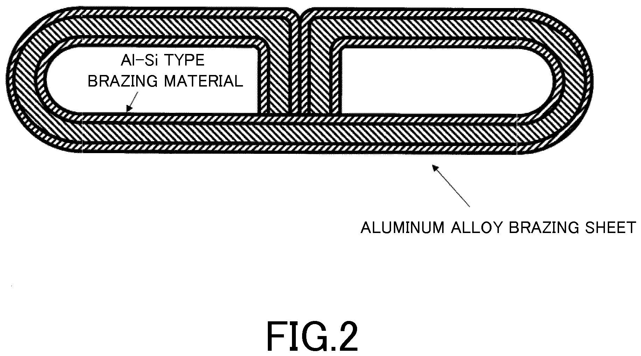

An aluminum alloy brazing sheet is described in Patent Literature 1 that is clad on both surfaces using a material has both a brazing function and a sacrificial anode effect. This brazing sheet is used mainly in an automotive heat exchanger such as a radiator in which cooling water flows through the interior of tubes. In a structure forming a "B" cross-section shape by brazing both end portions of the tube material to the tube inner surface as illustrated in FIG. 2, at an inner surface of the tubes, an Al-Si type alloy brazing material is used that has both the brazing function and the sacrificial anode effect by the addition of Zn to the brazing material that has a lower Si content than that of a normal brazing material, and a brazing supplementation function is achieved by slight melting of the Al-Si type brazing material of the tube interior surface. However, the prevention the occurrence of preferential corrosion is not considered whatsoever for the material described in Patent Literature 1.

That is to say, the brazing sheet described in Patent Literature 1 enables brazing between tubing members in a "B" shape.
The decrease in sacrificial anode effect due to flowing of filler material is prevented by adding a lower amount of Si to the clad layer than typical for an Al-Si type alloy brazing material and using the Al-Si type brazing material that has a sacrificial anode effect. However, there is no attempt to prevent the preferential corrosion caused by concentration of Zn at the joined portion.

Further, the brazing sheet described in Patent Literature 1 causes slight melting of filler material by the addition of Si to the sacrificial anode material, and by the addition of Si to the sacrificial anode material, supplements brazing between the brazing material members of the tubing material formed into the "B" cross-section-shaped sheet. However, the brazing of sacrificial anode material members to which Si is added is not considered whatsoever.

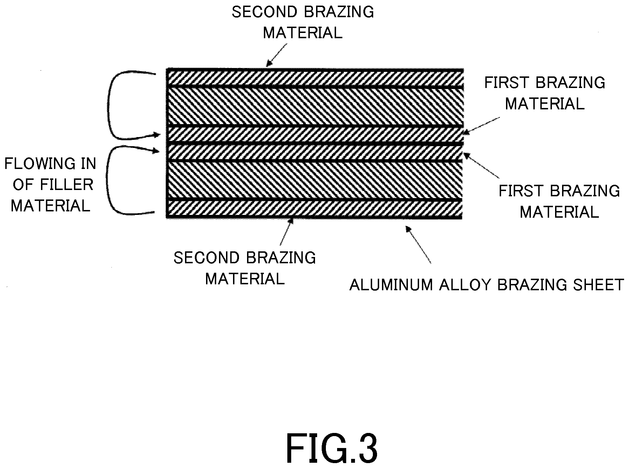

Further, Patent Literature 2 describes an aluminum alloy brazing sheet in which Al-Si type alloy brazing material is clad to both surfaces, an amount of the filler material component occurring in the brazing material of one surface is decreased, and the aluminum alloy brazing sheet has a function for joining at plate edge portions both of the brazing material surfaces. As illustrated in FIG. 3, at the brazing portion between first brazing material members clad on one surface and having a low amount of filler material during brazing, and this technique supplements the insufficient filler material by inflow of filler material of a second brazing material of Al-Si type alloy clad to the other surface.

Further, Zn may be added to the Al-Si type brazing material having the low filler material amount of the Al alloy brazing sheet described in Patent Literature 2, and in this case, there is suppression of the preferential corrosion due to Zn concentration occurring at the joined portion of the brazing material surfaces for which the filler material amount of the plate edge portions is lowered. However, this technique does not use the brazing material composition, and for example, in the case in which the joined portion is long, this technique has problems in that, for example, the amount of inflowing filler material is insufficient for brazing so that brazing performance is insufficient, and sensitivity to preferential corrosion of the joined portion increases. Further, the Zn is added only to the Al-Si type alloy brazing material that has a reduced filler material amount, and there is no consideration whatsoever concerning the corrosion performance of the other surface clad by the Al-Si type alloy brazing material.

### Citation List

### Patent Literature

Patent Literature 1: Unexamined Japanese Patent Application Kokai Publication No. 2005-307252
Patent Literature 2: Unexamined Japanese Patent Application Kokai Publication No. 2007-178062

### Summary of Invention

### Technical Problem

During use of the aluminum alloy brazing sheet, for example, as the flow channel shaped component of the automotive heat exchanger as described above, in the case in which the corrosion environment of the inner surface or the inner and outer surfaces of the flow channel shaped component is problematic, conventional technology has difficulty providing an aluminum alloy brazing sheet that has a brazing function at the inner and outer surfaces of the flow channel shaped component, that is equipped with the sacrificial anode effect at the inner surface or both inner and outer surfaces, and further, that enables sufficient brazing of the two sheets in the case in which the brazing portion length between the flow channel shaped components is long, and that avoids the occurrence of preferential corrosion at the brazing portion.

The present disclosure is achieved by solving the aforementioned problems to be solved, and an objective of the present disclosure is to provide an aluminum alloy brazing sheet, a manufacturing method therefor, and a manufacturing method for an automotive brazing sheet, in which Al-Si type brazing material having a brazing function is clad to both surfaces of the aluminum alloy brazing sheet, one surface or both surfaces of the aluminum alloy brazing sheet have a sacrificial anode effect, preferential corrosion of the joined portion is prevented, and the aluminum alloy brazing sheet achieves a good brazing function in that molten filler material does not spread to the core material during brazing. This type of highly corrosion-resistant aluminum alloy brazing sheet can be used with advantage as a flow channel shaped component of the automotive heat exchanger.

### Solution to Problem

As a result of an accumulation of intensive research by the inventors of the present disclosure, the present disclosure is achieved by discovery that the problem is solved by a material formed by cladding a first brazing material on one surface of a core material, and by cladding a second brazing material of the other surface of the core material, each material having a specific alloy composition.

Specifically, in first aspect of the present disclosure, an aluminum alloy brazing sheet includes a core material including an aluminum alloy, a first brazing material clad to one surface of the core material, and a second brazing material clad to another surface of the core material. The aluminum alloy of the core material includes 0.05 to 1.50 mass% Fe and 0.30 to 2.00 mass% Mn, with a balance consisting of Al and inevitable impurities; the first brazing material includes an aluminum alloy including 1.50 to 4.00 mass% Si, 0.05 to 1.50 mass% Fe, and 1.00 to 6.00 mass% Zn, with a balance consisting of Al and inevitable impurities, the first brazing material having a sacrificial anode effect and a brazing function; the second brazing material includes an aluminum alloy including 4.00 to 13.00 mass% Si and 0.05 to 1.00 mass% Fe, with a balance consisting of Al and inevitable impurities, the second brazing material having a sacrificial anode effect and a brazing function; and a count of an Al-Si-Fe intermetallic compound having an equivalent circle diameter of 0.5 to 80.0 µm in the second brazing material is less than or equal to 2,000 particles per mm².

Per a second aspect of the present disclosure, in the aluminum alloy brazing sheet according to the first aspect, the core material of the aluminum alloy further includes at least one selected from 0.01 to 1.50 mass% Si, 0.03 to 2.00 mass% Cu, 0.01 to 0.50 mass% Mg, 0.05 to 0.30 mass% Ti, 0.05 to 0.30 mass% Zr, 0.05 to 0.30 mass% Cr, and 0.05 to 0.30 mass% V.

Per a third aspect of the present disclosure, in the aluminum alloy brazing sheet according to the first or second aspect, the aluminum alloy of the first brazing material further includes at least one selected from 0.05 to 0.50 mass% Cu, 0.05 to 1.50 mass% Mn, 0.01 to 0.50 mass% Mg, 0.05 to 0.30 mass% Ti, 0.05 to 0.30 mass% Zr, 0.05 to 0.30 mass% Cr, and 0.05 to 0.30 mass% V.

Per a fourth aspect of the present disclosure, in the aluminum alloy brazing sheet according to any one of the first to third aspects, the aluminum alloy of the first brazing material further includes at one type or two types selected from among 0.001 to 0.050 mass% Na and 0.001 to 0.050 mass% Sr.

Per a fifth aspect of the present disclosure, in the aluminum alloy brazing sheet according to any one of the first to fourth aspects, the aluminum alloy of the second brazing material further comprises at least one selected from: 0.50 to 5.00 mass% Zn, the content of Zn being at least 0.20 mass% or lower than the content of Zn in the first blazing material, 0.05 to 0.50 mass% Cu, 0.05 to 1.50 mass% Mn, 0.01 to 0.50 mass% Mn,
0.05 to 0.30 mass% Ti, 0.05 to 0.30 mass% Zr, 0.05 to 0.30 mass%
Cr, or 0.05 to 0.30 mass% V.

Per a sixth aspect of the present disclosure, in the aluminum alloy brazing sheet according to any one of the first to 5th aspects, the aluminum alloy of the second brazing material further includes one type or two types selected from 0.001 to 0.050 mass% Na and 0.001 to 0.050 mass% Sr.

Per a seventh aspect of the present disclosure, in the aluminum alloy brazing sheet according to any one of the first to sixth aspects, the content of the Al-Si-Fe intermetallic compound having an equivalent circle diameter of 0.5 to 80.0 µm is less than or equal to 1,000 particles per mm² in the second brazing material.

Per an eighth aspect of the present disclosure, in a manufacturing method of the aluminum alloy blazing sheet of any one of the first to seventh aspects, the method includes:
a casting step of casting the aluminum alloy for use in the core material, casting the aluminum alloy for use in the first brazing material, and casting the aluminum alloy for use in the second brazing material;
a hot rolling step of hot rolling a cast ingot of the first brazing material to a prescribed thickness thereof, and hot rolling a cast ingot of the second brazing material to a prescribed thickness thereof;
a cladding step of cladding the first brazing material having the prescribed thickness thereof by hot rolling to one face of a core material ingot, and cladding of the second brazing material having the prescribed thickness thereof by hot rolling to another face of the core material ingot;
a hot clad rolling step of hot rolling a clad material;
a cold rolling step of cold rolling the hot clad-rolled clad material; and
an annealing step of annealing the clad material at least once, a time of the annealing being in at least one of (i) during the cold rolling step, or (ii) after the cold rolling step.

In the hot rolling step of the second brazing material, a mass of the ingot of the second brazing material occurring prior to the hot rolling step is greater than or equal to 1.5 t, a plate thickness is greater than or equal to 250 mm, a heating temperature of the ingot of the second brazing material occurring prior to the hot rolling step is 400 to 550°C, and a heating time is 1 to 30 h.

A maximum flow rate of a coolant is set less than or equal to 10 m³/minute, and a utilized total amount of the coolant is set less than or equal to 30 m³, so that the plate thickness of the second brazing material occurring within 30 minutes of a start of the hot rolling step is less than or equal to 150 mm.

Per a ninth aspect of the present disclosure, a manufacturing method of an automotive heat exchanger includes brazing to join together members of the first brazing material of the aluminum alloy brazing sheet according to any one of the first to seventh aspects, and causing a molten filler material of the second brazing material to flow to a joined position of the members of the first brazing material during the brazing. The first brazing material and the second brazing material both have brazing performance, and one or both of the first brazing material and the second brazing material has a sacrificial anode effect, so that the second brazing material supplements an insufficiency of the filler material during the brazing of the members of the first brazing material, and simultaneously, a content of Zn occurring at the joined portion of the members of the first brazing material is diluted.

### Advantageous Effects of Invention

According to the present disclosure, when the aluminum alloy brazing sheet is used for a flow channel shaped component of a heat exchanger, for example, and in the case in which one surface or both surfaces of the flow channel component are in a corrosive environment, and preventing corrosion by the fins is a problem, the aluminum alloy brazing sheet and manufacturing method therefor are provided, in which both surfaces of the flow channel shaped component have the brazing function, one or both surfaces have the sacrificial anode effect, and the aluminum alloy brazing sheet further suppresses preferential corrosion occurring at the joined portion of the flow channel shaped components; and a method for manufacture of the automotive heat exchanger using the brazing sheet is provided. This brazing sheet has excellent brazeability such as such as erosion resistance, and is used with advantage as the automotive heat exchanger flow channel shaped component.

### Brief Description of Drawings

FIG. 1 is a schematic drawing of a stacked-type heat exchanger using an aluminum alloy brazing sheet according to the present disclosure;
FIG. 2 is a cross-sectional drawing formed into a "B"-shaped cross section using the aluminum alloy brazing sheet;
FIG. 3 is a schematic drawing illustrating a technique of supplementing insufficient filler material during brazing using the aluminum alloy brazing sheet; and
FIG. 4 is a schematic drawing illustrating a test piece used in an example of the present disclosure.

### Description of Embodiments

Preferred embodiments of an aluminum alloy brazing sheet and a manufacturing method therefor according to the present disclosure are described in detail below.

### 1. Brazing and Preferential Corrosion at a Joined Portion of First Brazing Material Members

FIG. 1 illustrates a heat exchanger, such as a radiator, using the aluminum alloy brazing sheet according to the present disclosure, in which a tank part has a stacked structure. This is a solution method to be applied to an application in which a brazing joined portion of first brazing material members that have a long joined portion is present at the edge portions of the flow channel shaped component, brazing is required at both faces of the flow channel shaped component, one or both surfaces of the flow channel shaped component are in a corrosive environment, a first brazing material surface requires a higher corrosion resistance than a second brazing material surface, and corrosion prevention of the flow channel shaped component is not to be performed using the fins as a sacrificial anode.

In the case in which a brazing function is required on both surfaces of the flow channel shaped component in this manner, and there is a corrosive environment at one surface or both surfaces of the flow channel shaped component, then a surface in the corrosive environment is required to sacrificially corrode. The sacrificial anode effect due to the fins cannot be used for both surfaces, and thus cladding by Al-Si type alloy brazing material having Zn added to impart the sacrificial anode effect to one surface or both surfaces of the flow channel shaped component is required. However, a problem arises in that Zn concentrates at the brazing joined portion of the first brazing material members, and preferential corrosion occurs at this Zn-concentrated portion.

The filler material melt amount decreases during brazing due to lowering of the Si content of the first brazing material, the Si content of which is lowered due to the first brazing material being in a severely corrosive environment such as that of cooling water, and thus securing of thickness of the sacrificial corrosion layer is required. However, when the filler material melt amount is lowered, a problem arises in that the filler material of the brazing joined portion of the first brazing material members is insufficient.

The objective of the aluminum alloy brazing sheet according to the present disclosure is to effectively solve such problems. That is to say, during brazing, by causing filler material of the second brazing material, that has a lower Zn content and a higher filler material melt amount than those of the first brazing material, to flow into the joined portion of the first brazing material members, the insufficiency of the filler material amount at the brazing joined portion of the first brazing material members is supplemented, and simultaneously the Zn concentration at the joined portion is mitigated, and thus the preferential corrosion of this joined portion can be suppressed.

### 2. Alloy Compositions

The alloy compositions of the core material, first brazing material, and second brazing material included in the aluminum alloy brazing sheet according to the present disclosure are described next.

### 2-1. Core material

An aluminum alloy is used for the core material that includes 0.05 to 1.50 mass% Fe (referred to hereinafter simply as "%") and 0.30 to 2.00% Mn as necessary elements, with a balance consisting of Al and inevitable impurities.

In addition to the aforementioned necessary elements, the core material may further include as selectively added elements at least one of 0.01 to 1.50% Si, 0.03 to 2.00% Cu, 0.01 to 0.50% Mg, 0.05 to 0.30% Ti, 0.05 to 0.30% Zr, 0.05 to 0.30% Cr, or 0.05 to 0.30% V. Further, in addition to the aforementioned necessary elements and selectively added elements, inevitable impurities may be included at concentrations less than or equal to 0.05% for each individual impurity, and less than or equal to 0.15% for all the inevitable impurities. Each included component is described below.

### 0.05 to 1.50% Fe

Fe easily generates an intermetallic compound of a size capable of becoming recrystallization nuclei, makes the post-brazing crystal grains coarse, and suppresses diffusion of Si to the core material from the brazing material. The Fe content is 0.05 to 1.50%. An Fe content less than 0.05% may increase cost due to the required use of high-priced aluminum metal. However, when the Fe content exceeds 1.50%, the post-brazing crystal grain diameter becomes minute, and filler material diffusion can occur. The content of Fe is preferably 0.10 to 1.00%.

### 0.30 to 2.00% Mn

Mn increases strength by solid solution strengthening by dissolving in the aluminum parent phase to form a solid solution, or improves strength by diffusion strengthening by forming an Al-Mn type intermetallic compound. The Mn content is 0.30 to 2.00%. The aforementioned effects are insufficient if the Mn content is less than 0.30%. A large intermetallic compound easily forms during casting when the content exceeds 2.00%, and this degrades plastic workability. The content of Mn is preferably 0.40 to 1.80%.

### 0.01 to 1.50% Si

Si may be included due to Si forming an Al-Mn-Si type intermetallic compound together with Mn, causing an improvement of strength by diffusion strengthening, or increasing strength by solid solution strengthening by dissolving in the aluminum parent phase to form a solid solution. The Si content is 0.01 to 1.50%. A Si content less than 0.01% may increase cost due to the required use of high-purity aluminum metal. However, when the Si content exceeds 1.50%, melting may occur due to lowering of the melting point of the core material. The content of Si is preferably 0.03 to 1.20%.

### 0.03 to 2.00% Cu

Cu may be included to cause an improvement of strength by solid solution strengthening. The Cu content is 0.03 to 2.00%. At a Cu content less than 0.03%, the aforementioned effect is insufficient. However, when the Cu content exceeds 2.00%, cracking of the aluminum alloy may occur during casting. The content of Cu is preferably 0.05 to 1.50%.

### 0.01 to 0.50% Mg

Mg may be included to cause an improvement of strength by precipitation of Mg-Si. The Mg content is 0.01 to 0.50%. At a Mg content less than 0.01%, the aforementioned effect is insufficient. However, brazing is difficult when the Mg content exceeds 0.50%. The content of Mg is preferably 0.10 to 0.40%.

### 0.05 to 0.30% Ti

Ti may be included to cause an improvement of strength by solid solution strengthening. The Ti content is 0.05 to 0.30%. At a Ti content less than 0.05%, the aforementioned effect is insufficient. However, when the Ti content exceeds 0.30%, a large intermetallic compound is easily generated, causing a lowering of plastic workability. The content of Ti is preferably 0.10 to 0.20%.

### 0.05 to 0.30% Zr

Zr may be included to cause an improvement of strength due to solid solution strengthening, and to cause precipitation of an Al-Zr type intermetallic compound such that the post-brazing grains become coarse. The Zr content is 0.05 to 0.30%. The aforementioned effects are insufficient if the Zr content is less than 0.05%. However, if the Zr content exceeds 0.30%, a large intermetallic compound is easily generated, causing a decrease in plastic workability. The content of Zr is preferably 0.10 to 0.20%.

### 0.05 to 0.30% Cr

Cr may be included to cause an improvement of strength due to solid solution strengthening, and to increase strength by precipitation of an Al-Cr type intermetallic compound. The Cr content is 0.05 to 0.30%. The aforementioned effects are insufficient if the Cr content is less than 0.05%. However, if the Cr content exceeds 0.30%, a large intermetallic compound is easily generated, causing a decrease in plastic workability. The content of Cr is preferably 0.10 to 0.20%.

### 0.05 to 0.30% V

V may be included to cause improvement of strength by solid solution strengthening, and to improve corrosion resistance. The V content is 0.05 to 0.30%. The aforementioned effects are insufficient if the V content is less than 0.05%. However, if the V content exceeds 0.30%, a large intermetallic compound is easily generated, causing a decrease in plastic workability. The content of V is preferably 0.10 to 0.20%.

Among these Si, Cu, Mg, Ti, Zr, and Cr type components, at least one type may be added as required to the core material.

### 2-2. First Brazing Material

An aluminum alloy is used for the first brazing material that includes 1.50 to 4.00% Si, 0.05 to 1.50% Fe, and 1.00 to 6.00% Zn as necessary elements, with a balance consisting of Al and inevitable impurities.

In addition to the aforementioned necessary elements, the first brazing material may further include as first selectively added elements at least one of 0.05 to 0.50% Cu, 0.05 to 1.50% Mn, 0.01 to 0.50% Mg, 0.05 to 0.30% Ti, 0.05 to 0.30% Zr, 0.05 to 0.30% Cr, or 0.05 to 0.30% V. Further, at least one of 0.001 to 0.050% Na or 0.001 to 0.050% Sr may be further included as second selectively added elements. Further, in addition to the aforementioned necessary elements, the first selectively added elements, and the second selectively added elements, inevitable impurities may be included at concentrations less than or equal to 0.05% for each individual impurity, and less than or equal to 0.15% for all the inevitable impurities. Each of the components is described below.

### 1.50 to 4.00% Si

Addition of Si enables brazing by lowering the melting point of the brazing material and allowing the formation of the liquid phase. The Si content is 1.50 to 4.00%. A slight amount of the liquid phase is generated if the Si content less than 1.50%, and the achievement of the brazing function becomes difficult. However, when the Si content exceeds 4.00%, a large amount of filler material flows, and maintaining corrosion resistance is difficult. The Si content is preferably 2.00 to 3.50%.

### 0.05 to 1.50% Fe

Al-Fe type and Al-Si-Fe type intermetallic compounds are easily generated due to the addition of Fe. This results in a lowering of the amount of Si that is effective for brazing, and may cause a lowering of brazing function. The Fe content is 0.05 to 1.50%. An Fe content less than 0.05% may increase cost due to the required use of high-priced aluminum metal. However, when the Fe content exceeds 1.50%, brazing due to the aforementioned effect becomes insufficient. The content of Fe is preferably 0.10 to 1.00%.

### 1.00 to 6.00% Zn

Addition of Zn lowers the pitting potential, and forms a potential difference versus the core material, thereby increasing corrosion resistance due to sacrificial anode effect. The Zn content is 1.00 to 6.00%. Sufficient corrosion resistance improvement by sacrificial anode effect is not obtained when the Zn content is less than 1.00%.
However, if the Zn content exceeds 6.00%, the corrosion rate increases, the sacrificial corrosion protection layer is lost at an early stage, and corrosion resistance decreases. The content of Zn is preferably 1.50 to 5.00%.

### 0.05 to 0.50% Cu

Cu may be included to cause an improvement of strength by solid solution strengthening. The Cu content is 0.05 to 0.50%. At a Cu content less than 0.05%, the aforementioned effect is insufficient. However, when the Cu content exceeds 0.50%, the pitting potential of the sacrificial corrosion prevention layer becomes high, the sacrificial anode effect is lost, and corrosion resistance decreases. The Cu content is preferably 0.10 to 0.40%.

### 0.05 to 1.50% Mn

Mn may be included to improve strength and corrosion resistance. The Mn content is 0.05 to 1.50%. If the Mn content exceeds 1.50%, a large intermetallic compound easily forms, and workability decreases; and further, due to increase in the potential of the sacrificial anode, sacrificial anode effect is impeded, and corrosion resistance declines. However, the aforementioned effects are not sufficient obtained if the Mn content is less than 0.05%. The Mn content is preferably 0.10 to 1.00%.

### 0.01 to 0.50% Mg

Mg may be included in order to improve strength by diffusing into the core material during the heating of brazing and causing precipitation of a Mg-Si type intermetallic compound. The content of Mg is 0.01 to 0.50%. At a Mg content less than 0.01%, the aforementioned effect is insufficient; and brazing is difficult when this content exceeds 0.50%. The content of Mg is preferably 0.10 to 0.40%.

### 0.05 to 0.30% Ti

Ti may be included to cause an improvement of strength by solid solution strengthening, and to increase corrosion resistance. The Ti content is 0.05 to 0.30%. At a Ti content less than 0.05%, the aforementioned effect is insufficient. However, when the Ti content exceeds 0.30%, a large intermetallic compound is easily generated, causing a lowering of plastic workability. The content of Ti is preferably 0.10 to 0.20%.

### 0.05 to 0.30% Zr

Zr may be included to cause an improvement of strength due to solid solution strengthening, and to cause precipitation of an Al-Zr type intermetallic compound such that the post-brazing grains become coarse. The Zr content is 0.05 to 0.30%. The aforementioned effects are insufficient if the Zr content is less than 0.05%. However, if the Zr content exceeds 0.30%, a large intermetallic compound is easily generated, causing a decrease in plastic workability. The content of Zr is preferably 0.10 to 0.20%.

### 0.05 to 0.30% Cr

Cr may be included to cause an improvement of strength due to solid solution strengthening, and to cause an increase in post-brazing grain size due to precipitation of an Al-Cr type intermetallic compound. The Cr content is 0.05 to 0.30%. The aforementioned effects are insufficient if the Cr content is less than 0.05%. However, if the Cr content exceeds 0.30%, a large intermetallic compound is easily generated, causing a decrease in plastic workability. The content of Cr is preferably 0.10 to 0.20%.

### 0.05 to 0.30% V

V may be included to cause improvement of strength by solid solution strengthening, and to improve corrosion resistance. The V content is 0.05 to 0.30%. The aforementioned effects are insufficient if the V content is less than 0.05%. However, if the V content exceeds 0.30%, a large intermetallic compound is easily generated, causing a decrease in plastic workability. The content of V is preferably 0.10 to 0.20%.

### 0.001 to 0.050% Na

Na may be included due to having the effect of causing dispersion of Si atoms in the brazing material and causing uniform dispersion. Content of Na is 0.001 to 0.050%. The aforementioned effects are insufficient if the Na content is less than 0.001%. However, due to a further increased effect not being obtained, a Na content in excess of 0.050% is uneconomical. The content of Na is preferably 0.005 to 0.040%.

### 0.001 to 0.050% Sr

Sr may be included due to having the effect of causing dispersion of Si atoms in the brazing material and causing uniform dispersion. Content of Sr is 0.001 to 0.050%. The aforementioned effects are insufficient if the Sr content is less than 0.001%. However, due to a further increased effect not being obtained, a Sr content in excess of 0.050% is uneconomical. The content of Sr is preferably 0.005 to 0.050%.

Among these Cu, Mn, Mg, Ti, Zr, Cr, V, Na, and Sr type components, at least one type may be added as required to the first filler material.

### 2-3. Second Brazing Material

An aluminum alloy is used for the second brazing material that includes 4.00 to 13.00% Si and 0.05 to 1.00% Fe as necessary elements, with a balance consisting of Al and inevitable impurities.

In addition to the aforementioned necessary elements, the second brazing material may further include as first selectively added elements at least one of 0.50 to 5.00% Zn, 0.05 to 0.50% Cu (at least 0.20% lower than the Zn content of the first brazing material), 0.05 to 1.50% Mn, 0.01 to 0.50% Mg, 0.05 to 0.30% Ti, 0.05 to 0.30% Zr, 0.05 to 0.30% Cr, or 0.05 to 0.30% V. Further, at least one of 0.001 to 0.050% Na or 0.001 to 0.050% Sr may be further included as second selectively added elements. Further, in addition to the aforementioned necessary elements, the first selectively added elements, and the second selectively added elements, inevitable impurities may be included at concentrations less than or equal to 0.05% for each individual impurity, and less than or equal to 0.15% for all the inevitable impurities. Each of the components is described below.

### 4.00 to 13.00% Si

Addition of Si enables brazing by lowering the melting point of the brazing material and allowing the formation of the liquid phase. The Si content is 4.00 to 13.00%. As described above, due to the Zn content being lower than that of the first brazing material, and due to the flowing of filler material of the second brazing material that has a larger filler material melt amount than that of the first brazing material to the joined portion of the first brazing material members during brazing, simultaneous with supplementing the insufficiency of the amount of filler material, the concentration of Zn at the joined portion is mitigated, and thus preferential corrosion of the joined portion can be prevented. If the Si content of the second brazing material is less than 4.00%, flowing of filler material of the second brazing material to the joined portion of the first brazing material members is difficult. However, if the content of Si exceeds 13.00%, the amount of Si diffusion to the opposite member during brazing is excessive, and this results in melting of the opposite member. The Si content is preferably 5.00 to 10.00%.

### 0.05 to 1.00% Fe

Fe easily generates Al-Fe type and Al-Si-Fe type intermetallic compounds so as to lower flowability of the filler material, so that flowing of a sufficient amount of filler material to the joined portion of the first brazing material members present at the plate edge is difficult. The Fe content is 0.05 to 1.00%. An Fe content less than 0.05% may increase cost due to the required use of high-priced aluminum metal. However, when the Fe content exceeds 1.00%, brazing at the joined portion of the first brazing material members present at the plate edges is insufficient due to the aforementioned effects.
The content of Fe is preferably 0.10 to 0.80%.

### 0.50 to 5.00% Zn, and 0.20% or More below Zn Content of First Brazing Material

Due to decrease in pitting potential and formation of a potential difference relative to the core material, Zn may be included to cause an increase in corrosion resistance by sacrificial anode effect. The Zn content is 0.50 to 5.00%, and is at least 0.2% lower than the Zn content of the first brazing material. If the Zn content exceeds 5.00, the corrosion rate increases, the sacrificial corrosion prevention layer is lost at an early stage, and corrosion resistance declines. However, the sacrificial corrosion prevention effect is insufficient if the Zn content is less than 0.50%. If the difference in the Zn content versus the first brazing material is less than 0.20%, the preferential corrosion suppression effect due to Zn concentration at the joined portion is insufficient. The Zn content is preferably 1.00 to 4.00%, and preferably is at least 0.50% less than the content in the first brazing material.

### 0.05 to 0.50% Cu

Cu may be included to cause an improvement of strength by solid solution strengthening. The Cu content is 0.05 to 0.50%. At a Cu content less than 0.05%, the aforementioned effect is insufficient. However, when the Cu content exceeds 0.50%, the pitting potential of the sacrificial corrosion prevention layer becomes high, the sacrificial anode effect is lost, and corrosion resistance declines. The content of Cu is preferably 0.10 to 0.40%.

### 0.05 to 1.50% Mn

Mn may be included to improve strength and corrosion resistance. The Mn content is 0.05 to 1.50%. If the Mn content is less than 0.05%, the aforementioned effects are insufficient. However, if the Mn content exceeds 1.5%, a large intermetallic compound easily forms, and workability decreases; and further, due to the potential of the sacrificial anode being made high, sacrificial anode effect is impeded, and corrosion resistance declines. The Mn content is preferably 0.10 to 1.00%.

### 0.01 to 0.50% Mg

Mg may be included to cause an improvement of strength by diffusion to the core material during brazing-heating and to cause precipitation of a Mg-Si type intermetallic compound. The Mg content is 0.01 to 0.50%. At a Mg content less than 0.01%, the aforementioned effect is insufficient; and brazing is difficult when the Mg content exceeds 0.50%. The content of Mg is preferably 0.10 to 0.40%.

### 0.05 to 0.30% Ti

Ti may be included to cause an improvement of strength by solid solution strengthening, and to increase corrosion resistance. The Ti content is 0.05 to 0.30%. At a Ti content less than 0.05%, the aforementioned effect is insufficient. However, when the Ti content exceeds 0.30%, a large intermetallic compound is easily generated, causing a lowering of plastic workability. The content of Ti is preferably 0.10 to 0.20%.

### 0.05 to 0.30% Zr

Zr may be included to cause an improvement of strength due to solid solution strengthening, and to cause precipitation of an Al-Zr type intermetallic compound such that the post-brazing grains become coarse. The Zr content is 0.05 to 0.30%. The aforementioned effects are insufficient if the Zr content is less than 0.05%. However, if the Zr content exceeds 0.30%, a large intermetallic compound is easily generated, causing a decrease in plastic workability. The content of Zr is preferably 0.10 to 0.20%.

### 0.05 to 0.30% Cr

Cr may be included to cause an improvement of strength due to solid solution strengthening, and to cause precipitation of a Al-Cr type intermetallic compound to increase the post-brazing grain size. The Cr content is 0.05 to 0.30%. The aforementioned effects are insufficient if the Cr content is less than 0.05%. However, if the Cr content exceeds 0.30%, a large intermetallic compound is easily generated, causing a decrease in plastic workability. The content of Cr is preferably 0.10 to 0.20%.

### 0.05 to 0.30% V

V may be included to cause improvement of strength by solid solution strengthening, and to improve corrosion resistance. The V content is 0.05 to 0.30%. The aforementioned effects are insufficient if the V content is less than 0.05%. However, if the V content exceeds 0.30%, a large intermetallic compound is easily generated, causing a decrease in plastic workability. The content of V is preferably 0.10 to 0.20%.

### 0.001 to 0.050% Na

Na may be included due to having the effect of causing dispersion of Si atoms in the brazing material and causing uniform dispersion. Content of Na is 0.001 to 0.050%. The aforementioned effects are insufficient if the Na content is less than 0.001%. However, due to a further increased effect not being obtained, a Na content in excess of 0.050% is uneconomical. The content of Na is preferably 0.005 to 0.040%.

### 0.001 to 0.050% Sr

Sr may be included due to having the effect of causing dispersion of Si atoms in the brazing material and causing uniform dispersion. Content of Sr is 0.001 to 0.050%. The aforementioned effects are insufficient if the Sr content is less than 0.001%. However, due to a further increased effect not being obtained, a Sr content in excess of 0.050% is uneconomical. The content of Sr is preferably 0.005 to 0.040%.

Among these Zn, Cu, Mn, Mg, Ti, Zr, Cr, V, Na, and Sr type components, at least one type may be added as required to the second brazing material.

### 3. Improvement of Brazing Performance and Suppression of Preferential Corrosion at Joined Portion of First Brazing Material Members

If a location exists on the post-brazing flow channel shaped component where the pitting potential is lower than that of the surroundings, preferential corrosion occurs at that portion of the post-brazing flow channel shaped component. In this type of post-brazing state, if a value obtained by subtracting a pitting potential of the eutectic composition occurring at the joined portion from the pitting potential of the non-brazing portion surface layer of the first brazing material is less than or equal to 50 mV, or if the pitting potential of the non-brazing portion surface layer of the first brazing material is less than the pitting potential of the eutectic composition occurring at the joined portion, corrosion occurs preferentially at the non-brazing portion of the first brazing material, and thus preferential corrosion of the joined portion does not occur.

However, the brazing material surface is required to corrode preferentially relative to the core material, that is to say, the post-brazing first brazing material is required to have a so-called sacrificial anode effect. In the case in which the difference in pitting potential between the core material and the post-brazing first brazing material surface is greater than or equal to 20 mV, a sacrificial anode effect due to the potential difference occurs, and thus the generation of through holes due to corrosion from the surface can be prevented. However, in the case in which the pitting potential difference between the core material and the post-brazing first brazing material surface is less than 20 mV, the sacrificial anode effect due to this potential difference is insufficient, and thus through holes due to corrosion from the surface are generated. Here, the expression "pitting potential difference between the core material and the post-brazing first brazing material surface" is defined to be the value obtained by subtracting the pitting potential of the first brazing material surface from the pitting potential of the core material that occurs after brazing.

Due to the post-brazing second brazing material surface becoming a corrosive environment due to the method of use, the second brazing material surface is required to preferentially corrode more than the core material, that is to say, the second brazing material surface is required to have so-called sacrificial anode effect. However, in the case in which the pitting potential difference between the core material and the post-brazing second brazing material surface is greater than or equal to 10 mV due to the second brazing material surface not being in as corrosive environment as that of the first brazing material, the sacrificial anode effect is achieved by this potential difference, and thus the generation of through holes due to corrosion from the surface can be prevented. However, in the case in which the pitting potential difference between the core material and the post-brazing second brazing material surface is less than 10 mV, the sacrificial anode effect due to this potential difference is insufficient, and thus through holes are generated due to corrosion from the surface. Here, the expression "pitting potential difference between the core material and the second brazing material surface after brazing" is defined to be a value obtained by subtracting the pitting potential of the second brazing material surface from the pitting potential of the core material after brazing.

In the aforementioned manner, the brazing sheet according to the present disclosure requires the presence of a suitable amount of filler material at the joined portion of the first brazing material members at the time of brazing, and in the state after brazing, requires having a suitable pitting potential relationship between each of the brazing material surface and the eutectic composition occurring at the brazing material of the joined portion and between the brazing material surface and the core material. Per the present disclosure, the relationship between the pitting potentials of the brazing material surface and the core material is made appropriate by adding Zn to the first brazing material or to both the first brazing material and the second brazing material. Further, by using the filler material of the first brazing material that melts slightly during brazing, the filler material of the second brazing material can be made to flow to the plate edge portion joined portion of the first brazing material members, and thus simultaneous with optimization of the joined portion filler material amount of the first brazing material members during brazing, the added amount of Si is greater than that of the first brazing material, and the second brazing material having a low added amount of Zn flows to the joined portion of the first brazing material members, so that the concentration of Zn in the eutectic composition occurring in the brazing material of the joined portion is mitigated, and the relationship of the pitting potentials of the eutectic composition and the brazing material surface occurring at the brazing material of the joined portion is made appropriate.

### 4. Metal Composition of the Second Brazing Material for Achieving the above Characteristics

In order to allow the second brazing material to flow to the joined portion of the first brazing material members present at the plate edge portion, the content of Si of the second brazing material is made greater than the amount of Si added to the first brazing material, and simultaneously, the count of the Al-Si-Fe type intermetallic compound present within the second brazing material is controlled. When a large amount of the intermetallic compound is present within the filler material of the melted second brazing material, fluidity of the filler material greatly decreases, and thus the second brazing material does not flow to the joined portion of the first brazing material members present at the plate edge portion. Thus the Al-Si-Fe intermetallic compound present in the second brazing material and having the equivalent circle diameter of 0.5 to 80.0 µm (referred to as below as equivalent circle diameter) is prescribed to be less than or equal to 2000 particles per mm². The aforementioned effects are obtained by making flowability of the filler material during blazing occurring at the second brazing material good, and by actively causing the filler material of the second brazing material to flow to the joined portion of the first brazing material components present at the plate edge portion. Further, the count density of this type of Al-Si-Fe intermetallic compound is prescribed both before brazing and after brazing in the brazing. That is to say, experiments by the inventors of the present disclosure made clear that, if the count density of the Al-Si-Fe intermetallic compound of the second brazing material occurring prior to brazing is prescribed to be less than or equal to 2,000 particles per mm², then the count density of the Al-Si-Fe intermetallic compound of the second brazing material occurring after brazing is less than or equal to 1,000 particles per mm².

When the density of the Al-Si-Fe type intermetallic compound having the equivalent circle diameter of 0.5 to 80.0 µm exceeds 2,000 particles per mm², flowability of the filler material during brazing of the second brazing material declines, and the aforementioned effects are not obtained. The density of the Al-Si-Fe intermetallic compound is preferably 300 to 1,800 particles per mm². Further, the second brazing material includes at least 4.0% Si and at least 0.05% Fe, and thus the density of the aforementioned Al-Si-Fe type intermetallic compound does not become less than 100 particles per mm².

Further, the equivalent circle diameter of the Al-Si-Fe type intermetallic compound is limited to 0.5 to 80.0 µm for the below described reasons. An Al-Si-Fe type intermetallic compound having an equivalent circle diameter less than 0.5 µm does not impede flowability of filler material, and thus is not subject to limitation. However, the Al-Si-Fe type intermetallic compound having an equivalent circle diameter exceeding 80.0 µm causes a lowering of plastic workability, so suitable adjustment of the hot processing or rolling conditions is required so that such an Al-Si-Fe type intermetallic compound is not present, and thus such an Al-Si-Fe type intermetallic compound is not subject to limitation.

Further, although no particular limitation is placed on the brazing conditions (conditions corresponding to brazing) occurring in the present disclosure, normally, after application of a fluoride type flux, filler materialing is performed by 10 to 2,000 seconds of heating under a nitrogen atmosphere using a maximum attained temperature of 580 to 620°C.

### Manufacturing Method

The manufacturing method of the aluminum alloy brazing sheet according to the present disclosure includes: a casting step of casting each of the aforementioned aluminum alloy for core material use, the aluminum alloy for first brazing material use, and the aluminum alloy for second brazing material use; a hot rolling step of hot rolling each of an ingot of the cast first brazing material to a prescribed thickness thereof and an ingot of the second brazing material to a prescribed thickness thereof; a cladding step of cladding the first brazing material of the prescribed thickness thereof by hot rolling to one surface of the core material ingot, and cladding the second brazing material of the prescribed thickness thereof by hot rolling to another surface of the core material ingot; a hot rolling step of hot rolling the clad material; a cold rolling step of cold rolling the hot-rolled clad material; and an annealing step of, at least once, annealing the clad material during and/or after the cold rolling step.

### 5-1. Hot Rolling Step of Ingot for Second Brazing Material Use

In order to control count density of the Al-Si-Fe intermetallic compound having an equivalent circle diameter of 0.5 to 80.0 µm in the second brazing material prior to brazing to less than or equal to 2,000 particles per mm², a step is added that, during the hot rolling of the ingot for second brazing material use, uses cooling by a coolant and processes under conditions maintained at high temperature. By this means, a small sized Al-Si-Fe intermetallic compound disappears due to Ostwald growth, and the rough Al-Si-Fe intermetallic compound increases in size. In this manner, the count density of the Al-Si-Fe intermetallic compound having an equivalent circle diameter of 0.5 to 80.0 µm in the second brazing material prior to brazing can be controlled to be less than or equal to 2,000 particles per mm².

Specifically, in the hot rolling step of the second brazing material, a mass of the ingot of the second brazing material occurring prior to the hot rolling step is made greater than or equal to 1.5 t, a plate thickness is made greater than or equal to 250 mm, a heating temperature of the ingot of the second brazing material occurring prior to the hot rolling step is 400 to 550°C, a heating time is 1 to 30 h, and so that a plate thickness of the second brazing material occurring within 30 minutes of a start of the hot rolling step is less than or equal to 150 mm, a maximum flow rate of a coolant is set less than or equal to 10 m³/minute, and a utilized total amount of the coolant is set less than or equal to 30 m³.

The control of cooling by the coolant in order to promote Ostwald growth in the hot rolling step of the second brazing material is performed during the period from the start of hot rolling until plate thickness reaches a thickness less than or equal to 150 mm. When the plate thickness becomes less than 150 mm, maintaining high temperature of the material becomes difficult due to cooling by the exterior air, heat removal by rolls, or the like, and thus a sufficient Ostwald growth-promotion effect is not obtained even if cooling by the coolant is suppressed. The final plate thickness after the second brazing material hot rolling step may be less than 150 mm. In this case, there is no requirement for the aforementioned control of cooling by the coolant after the plate thickness is less than 150 mm.

In the second brazing material hot rolling step, an increase in the degree of processing per unit time is required in order to cause the promotion of Ostwald growth. To cause such promotion, plate thickness prior to the start of hot rolling is 250 mm or greater, and is preferably 300 mm or greater; and rolling is required such that the plate thickness within 30 minutes after the start of hot rolling arrives at a value less than or equal to 150 mm. In the case in which the plate thickness is less than 250 mm prior to the start of hot rolling, the degree of processing is insufficient, and thus Ostwald growth is insufficiently promoted. Further, in the case in which the rolling period after the start of hot rolling until reaching the plate thickness less than or equal to 150 mm exceeds 30 minutes, the driving force of the degree of processing is insufficient, and thus the Ostwald growth promotion effect is insufficient. Further, although no particular limitation is placed on the lower limit of the hot rolling time until reaching the plate thickness less than or equal to 150 mm, rolling to reach the plate thickness less than or equal to 150 mm within one minute after the start of hot rolling is difficult. The rolling time after the start of hot rolling until reaching the plate thickness less than or equal to 150 mm is preferably 3 to 25 minutes. Further, although no particular limitation is placed on the plate thickness prior to the start of hot rolling, processing by rolling is difficult due to equipment limitations of the rolling equipment when this plate thickness exceeds 1,000 mm. Thus the plate thickness prior to the hot rolling is preferably less than or equal to 1,000 mm. Further, in the case in which the plate thickness after hot rolling is less than 150 mm, the total period used for hot rolling may exceed 30 minutes, as long as the rolling period from the start of hot rolling until reaching the plate thickness less than or equal to 150 mm is within 30 minutes. Although from the standpoint of Ostwald growth there is no upper limitation on the total period for hot rolling, the total period is preferably within 60 minutes due to marked economic loss due to excessive length of the time equipment is occupied when the total period exceeds 60 minutes.

In order to cause Ostwald growth in the second brazing material hot rolling step, the mass of the second brazing material formed from the Al-Si type alloy is required to be greater than or equal to 1.5 t (tons), and preferably is greater than or equal to 1.8 t. When this mass is less than 1.5 t, the maintenance of the material at high temperature is difficult due to rapid cooling during rolling so that the Ostwald growth promotion effect becomes insufficient. Further, although no particular limitation is placed on the upper limit of the mass of the second brazing material formed from the Al-Si type alloy, manufacturing is difficult when the mass exceeds 10 t, and thus the mass of the second brazing material formed from the Al-Si type alloy is preferably less than or equal to 10 t.

In order to promote Ostwald growth in the second brazing material hot rolling step, the heating temperature prior to the hot rolling is required to be 400 to 550°C, and preferably is 420 to 540°C. Due to poor plastic workability when this temperature is less than 400°C, problems such as edge cracking occur during rolling. However, when the temperature exceeds 550°C, the first brazing material may melt. Further, the heating period prior to the hot rolling is required to be 1 to 30 h, and preferably is set to 2 to 29 h. When this period is less than one hour, the material temperature becomes non-uniform, and the non-uniformity causes the generation of edge cracking. However, a period in excess of 30 h is uneconomical.

In order to promote Ostwald growth in the second brazing material hot rolling step, the cooling maximum flow rate is set less than or equal to 10 m³/minute, and preferably is set less than or equal to 9 m³/minute. When the maximum flow rate of the coolant exceeds 10 m³/minute, the cooling rate increases, the Ostwald growth promotion effect is insufficient due to difficulty in maintaining the material at high temperature. Although no particular limitation is placed on the lower limit of the maximum flow rate of the coolant, lubrication failure may occur when the maximum flow rate is less than 0.1 m³/minute, and thus the maximum flow rate of the coolant is preferably set to be greater than or equal to 0.1 m³/minute.

In order to promote Ostwald growth in the second brazing material hot rolling step, the total used amount of the coolant is set less than or equal to 30 m³, and preferably is set less than or equal to 28 m³. When the total used amount of the coolant exceeds 30 m³, due to cooling by the coolant, maintaining the material at high temperature is difficult, and thus the Ostwald growth promotion effect is insufficient. Although no particular limitation is placed on the lower limit of the total used amount of the coolant, lubrication failure may occur when the total used amount is less than 0.5 m³, and thus the total used amount of the coolant is preferably set greater than or equal to 0.5 m³.

### 5-2. Casting Step

Although not particular limitation is placed on conditions occurring during the casting step, the casting step is normally performed by water-cooled type semi-continuous casting.

### 5-3. Homogenizing Processing Step

In the aforementioned manufacturing method, a homogenizing processing step may be performed on at least one of the ingot for core material use prior to cladding by the first brazing material and the second brazing material, the ingot for first brazing material use prior to the hot rolling, or the ingot for second brazing material use prior to the hot rolling; or a homogenizing processing step may be performed on at least one of the ingot for core material use prior to cladding by the first brazing material and the second brazing material, the first brazing material after the hot rolling and prior to cladding to the ingot for core material use, or the second brazing material after the hot rolling and prior to cladding to the ingot for core material use.

The conditions of the core material for such homogenizing processing are preferably a 350 to 620°C temperature for 1 to 30 h. When the processing temperature is less than 350°C, the effect of the homogenizing processing is insufficient; and when the processing temperature exceeds 620°C, the core material may melt. Further, when the processing period is less than 1 hour, the effect of homogenizing processing is insufficiently realized; and productivity markedly declines when the processing period exceeds 30 h.

However, the homogenizing processing conditions for the first brazing material and the second brazing material are preferably 2 to 30 h at a temperature of 450 to 560°C. When the processing temperature is less than 450°C, the effect of the homogenizing processing is insufficient; and when the processing temperature exceeds 560°C, the brazing material may melt. Further, when the processing period is less than 2 h, the effect of homogenizing processing is insufficiently realized; and productivity markedly declines when the processing period exceeds 30 h.

### 5-4. Hot Rolling Step of the Ingot for First Brazing Material Use

During the hot rolling step of the first brazing material, normally a heating temperature prior to the hot rolling step is 400 to 560°C, and preferably is 420 to 540°C. When this heating temperature is less than 400°C, plastic workability is deficient, and thus problems may occur such as edge cracking during rolling. However, in the case of this heating temperature exceeding 560°C, the first brazing material may melt during heating. Further, the heating period prior to the hot rolling is set to be 1 to 30 h, and preferably is set to 2 to 29 h. When this period is less than one hour, the material temperature becomes non-uniform, and the non-uniformity causes the generation of edge cracking. However, a period in excess of 30 h is uneconomical.

### 5-5. Hot Clad Rolling Step

After performance of the cladding step by cladding of the first brazing material of the prescribed thickness thereof to one surface of the core material by hot rolling, and by cladding of the second brazing material of the prescribed thickness thereof to the other surface by hot rolling, the clad material is hot rolled in the hot clad rolling step. Heating temperature prior to rolling is normally 400 to 560°C, and preferably is 420 to 540°C. When this heating temperature is less than 400°C, plastic workability is poor, and thus problems may occur such as edge cracking during rolling. Further, cases may occur in which the rolling of the brazing material with respect to the core material is difficult, and proper hot rolling cannot be performed. However, when this heating temperature exceeds 560°C, the brazing material during heating may melt. Further, the period of heating prior to the hot clad rolling is set to 1 to 30 h, and preferably is set to 2 to 29 h. Material temperature is non-uniform at a heating period less than 1 hour, and this causes the occurrence of edge cracking. However, productivity markedly declines when the heating period exceeds 30 h.

### 5-6. Cold Rolling Step

After the cooling of the hot clad rolling step, the rolled plate undergoes a cold rolling step to a desired final plate thickness. Further, the final cold rolling reduction rate is preferably 10 to 80%. The "final cold rolling reduction rate" is termed the "cold rolling reduction rate" and is calculated from the plate thickness after hot clad rolling and the plate thickness after cold rolling.

### 5-7. Annealing Step

With the objective of decreasing processing, the annealing step is performed at least once during and/or after the cold rolling step. Specifically, (1) intermediate annealing is performed at least once during the cold rolling step, (2) final annealing is performed at least one time after the cold rolling step, or (3) (1) and (2) are performed. This annealing step is preferably performed by maintaining the clad material at 100 to 560°C for 1 to 30 h. When the temperature is less than 100°C or the holding period is less than 1 hour, the aforementioned effect may be insufficient. When the temperature exceeds 560°C, the brazing material may melt during heating; and economics is markedly worsened when the holding period exceeds 30 h. Further, a batch-type furnace may be used for the annealing step, or a continuous-type furnace may be used. Although no particular restriction is placed on the upper limit of the number of annealing steps, the upper limit is preferably 3 times in order to avoid cost increase due to the increase in the number of steps.

Although no particular limitation is placed on the thickness of the aluminum alloy brazing sheet, or on the cladding rates of the first brazing material and the second brazing material, according to the present disclosure, in the case of use as the flow channel shaped component of the automotive heat exchanger, for example, normally a thin brazing sheet having a thickness less than or equal to 1.0 mm is preferably used. However, this range of plate thickness is not limiting, and a relatively thickn material can be used that has a thickness greater than about 1.0 mm and less than about 5 mm. Further, the cladding rates of the first brazing material and second brazing material layers are normally 2 to 30%, and preferably are 4 to 28%.

### 6. Manufacturing Method of Automotive Heat Exchanger

The automotive heat exchanger is manufactured with advantage by use of the flow channel shaped component formed by processing the aforementioned aluminum alloy brazing sheet. Specifically, the surfaces of the first brazing material of the aluminum alloy brazing sheet according to the present disclosure are brought together and are brazed. During this brazing, the molten filler material of the second brazing material flows to the joined portion of the first brazing material members so that both the first brazing material and the second brazing material have brazeability. Further, the first brazing material and/or the second brazing material has the sacrificial anode effect. Thus the filler material insufficiency during brazing between the first brazing material members is supplemented by the second brazing material, and further, the Zn concentration occurring at the joined portion of the first brazing material members is diluted so that preferential corrosion of the joined portion is prevented. Although no particular limitation is placed on the brazing conditions, the brazing is normally performed by applying flux and by heating to about 580 to 620°C.

### Examples

Although the present disclosure is described in further detail on the basis of examples and comparative examples, the present disclosure is not limited to these examples.

The first brazing material alloys having the alloy compositions illustrated in Table 1, the core material alloys having the alloy compositions illustrated in Table 2, and the second brazing material alloys having the alloy compositions illustrated in Table 3 were each cast by continuous casting, both surfaces of each casting were face milled, and the homogenizing processing illustrated in Table 4 was performed. Plate thicknesses of the ingots of the core material and the first brazing material were 400 mm after face milling. The ingots of the first brazing material underwent a heating stage for 3 h at 450°C prior to the hot rolling, and then were hot rolled to a thickness of 50 mm. Further, the "-" notation in Tables 1 to 3 indicates a value lower than a measurement limit.

**Table 1**

| | Alloy no. | Alloy composition (mass%) | | | | | | | | | | | | |
|---|---|---|---|---|---|---|---|---|---|---|---|---|---|---|
| | | Si | Fe | Zn | Cu | Mn | Mg | Ti | Zr | Cr | V | Na | Sr | Al and inevitable impurities |
| | A1 | 2.80 | 0.75 | 3.50 | - | - | - | - | - | - | - | - | - | remainder |
| | A2 | 2.80 | 0.75 | 3.50 | 0.25 | 0.75 | 0.25 | 0.15 | 0.15 | 0.15 | 0.15 | 0.030 | 0.030 | remainder |
| | A3 | 1.50 | 0.75 | 3.50 | - | - | - | 0.05 | 0.05 | 0.05 | 0.05 | - | - | remainder |
| | A4 | 4.00 | 0.75 | 3.50 | - | - | - | 0.30 | - | - | - | - | - | remainder |
| | A5 | 2.80 | 0.05 | 3.50 | - | - | - | - | 0.30 | - | - | - | - | remainder |
| | A6 | 2.80 | 1.50 | 3.50 | - | - | - | - | - | 0.30 | - | - | - | remainder |
| Examples of present disclosure | A7 | 2.80 | 0.75 | 1.00 | - | - | - | - | - | - | 0.30 | - | - | remainder |
| | A8 | 2.80 | 0.75 | 5.20 | - | - | - | - | - | - | - | 0.001 | 0.001 | remainder |
| | A9 | 2.80 | 0.75 | 6.00 | - | - | - | - | - | - | - | 0.050 | - | remainder |
| | A10 | 2.80 | 0.75 | 3.50 | 0.05 | - | - | - | - | - | - | - | 0.050 | remainder |
| | A11 | 2.80 | 0.75 | 3.50 | 0.50 | - | - | - | - | - | - | - | - | remainder |
| | A12 | 2.80 | 0.75 | 3.50 | - | 0.05 | - | - | - | - | - | - | - | remainder |
| | A13 | 2.80 | 0.75 | 3.50 | - | 1.50 | - | - | - | - | - | - | - | remainder |
| | A14 | 2.80 | 0.75 | 3.50 | - | - | 0.01 | - | - | - | - | - | - | remainder |
| | A15 | 2.80 | 0.75 | 3.50 | - | - | 0.50 | - | - | - | - | - | - | remainder |
| Comparative examples | A16 | 1.45 | 0.75 | 3.50 | - | - | - | - | - | - | - | - | - | remainder |
| | A17 | 4.05 | 0.75 | 3.50 | - | - | - | - | - | - | - | - | - | remainder |
| | A18 | 2.80 | 1.55 | 3.50 | - | - | - | - | - | - | - | - | - | remainder |
| | A19 | 2.80 | 0.75 | 0.95 | - | - | - | - | - | - | - | - | - | remainder |
| | A20 | 2.80 | 0.75 | 6.05 | - | - | - | - | - | - | - | - | - | remainder |
| | A21 | 2.80 | 0.75 | 3.50 | 0.55 | - | - | - | - | - | - | - | - | remainder |
| | A22 | 2.80 | 0.75 | 3.50 | - | 1.55 | - | - | - | - | - | - | - | remainder |
| | A23 | 2.80 | 0.75 | 3.50 | - | - | 0.55 | - | - | - | - | - | - | remainder |
| | A24 | 2.80 | 0.75 | 3.50 | - | - | - | 0.35 | 0.35 | 0.35 | 0.35 | - | - | remainder |
| | A25 | 2.80 | 0.75 | 5.10 | - | - | - | - | - | - | - | - | - | remainder |

**Table 2**

| | Alloy no. | Alloy composition (mass%) | | | | | | | | | |
|---|---|---|---|---|---|---|---|---|---|---|---|
| | | Fe | Mn | Si | Cu | Mg | Ti | Zr | Cr | V | Al and inevitable impurities |
| Examples of present disc losure | B1 | 0.75 | 1.00 | - | - | - | - | - | - | - | remainder |
| | B2 | 0.75 | 1.00 | 0.75 | 1.00 | 0.25 | 0.15 | 0.15 | 0.15 | 0.15 | remainder |
| | B3 | 0.05 | 1.00 | - | - | - | 0.05 | 0.05 | 0.05 | 0.05 | remainder |
| | B4 | 1.50 | 1.00 | - | - | - | 0.30 | - | - | - | remainder |
| | B5 | 0.75 | 0.30 | - | - | - | - | 0.30 | - | - | remainder |
| | B6 | 0.75 | 2.00 | - | - | - | - | - | 0.30 | - | remainder |
| | B7 | 0.75 | 1.00 | 0.01 | - | - | - | - | - | 0.30 | remainder |
| | B8 | 0.75 | 1.00 | 1.50 | - | - | - | - | - | - | remainder |
| | B9 | 0.75 | 1.00 | - | 0.03 | - | - | - | - | - | remainder |
| | B10 | 0.75 | 1.00 | - | 2.00 | - | - | - | - | - | remainder |
| | B11 | 0.75 | 1.00 | - | - | 0.01 | - | - | - | - | remainder |
| | B12 | 0.75 | 1.00 | - | - | 0.50 | - | - | - | - | remainder |
| Comparative examples | B13 | 1.55 | 1.00 | - | - | - | - | - | - | - | remainder |
| | B14 | 0.75 | 0.25 | - | - | - | - | - | - | - | remainder |
| | B15 | 0.75 | 2.05 | - | - | - | - | - | - | - | remainder |
| | B16 | 0.75 | 1.00 | 1.55 | - | - | - | - | - | - | remainder |
| | B17 | 0.75 | 1.00 | - | 2.05 | - | - | - | - | - | remainder |
| | B18 | 0.75 | 1.00 | - | - | 0.55 | - | - | - | - | remainder |
| | B19 | 0.75 | 1.00 | - | - | - | 0.35 | 0.35 | 0.35 | 0.35 | remainder |

**Table 3**

| | Alloy no. | Alloy composition (mass%) | | | | | | | | | | | | |
|---|---|---|---|---|---|---|---|---|---|---|---|---|---|---|
| | | Si | Fe | Zn | Cu | Mn | Mg | Ti | Zr | Cr | V | Na | Sr | Al and inevitable impurities |
| | C1 | 6.50 | 0.75 | 2.75 | - | - | - | - | - | - | - | - | - | remainder |
| | C2 | 6.50 | 0.75 | 2.75 | 0.25 | 0.75 | 0.25 | 0.15 | 0.15 | 0.15 | 0.15 | 0.030 | 0.030 | remainder |
| | C3 | 4.00 | 0.75 | 2.75 | - | - | - | 0.05 | 0.05 | 0.05 | 0.05 | - | - | remainder |
| | C4 | 13.00 | 0.75 | 2.75 | - | - | - | 0.30 | - | - | - | - | - | remainder |
| | C5 | 6.50 | 0.05 | 2.75 | - | - | - | - | 0.30 | - | - | - | - | remainder |
| | C6 | 6.50 | 1.00 | 2.75 | - | - | - | - | - | 0.30 | - | - | - | remainder |
| | C7 | 6.50 | 0.75 | 0.50 | - | - | - | - | - | - | 0.30 | - | - | remainder |
| Examples of present disclosure | C8 | 6.50 | 0.75 | 1.00 | - | - | - | - | - | - | - | 0.001 | 0.001 | remainder |
| | C9 | 6.50 | 0.75 | 5.00 | - | - | - | - | - | - | - | 0.050 | - | remainder |
| | C10 | 6.50 | 0.75 | 2.75 | 0.05 | - | - | - | - | - | - | - | 0.050 | remainder |
| | C11 | 6.50 | 0.75 | 2.75 | 0.50 | - | - | - | - | - | - | - | - | remainder |
| | C12 | 6.50 | 0.75 | 2.75 | - | 0.05 | - | - | - | - | - | - | - | remainder |
| | C13 | 6.50 | 0.75 | 2.75 | - | 1.50 | - | - | - | - | - | - | - | remainder |
| | C14 | 6.50 | 0.75 | 2.75 | - | - | 0.01 | - | - | - | - | - | - | remainder |
| | C15 | 6.50 | 0.75 | 2.75 | - | - | 0.50 | - | - | - | - | - | - | remainder |
| | C16 | 6.50 | 0.75 | - | - | - | - | - | - | - | - | - | - | remainder |
| Comparative examples | C17 | 3.95 | 0.75 | 2.75 | - | - | - | - | - | - | - | - | - | remainder |
| | C18 | 13.05 | 0.75 | 2.75 | - | - | - | - | - | - | - | - | - | remainder |
| | C19 | 6.50 | 1.05 | 2.75 | - | - | - | - | - | - | - | - | - | remainder |
| | C20 | 6.50 | 0.75 | 5.05 | - | - | - | - | - | - | - | - | - | remainder |
| | C21 | 6.50 | 0.75 | 2.75 | 0.55 | - | - | - | - | - | - | - | - | remainder |
| | C22 | 6.50 | 0.75 | 2.75 | - | 1.55 | - | - | - | - | - | - | - | remainder |
| | C23 | 6.50 | 0.75 | 2.75 | - | - | 0.55 | - | - | - | - | - | - | remainder |
| | C24 | 6.50 | 0.75 | 2.75 | - | - | - | 0.35 | 0.35 | 0.35 | 0.35 | - | - | remainder |

**Table 4**

| | First brazing material | Core material | Second brazing material |
|---|---|---|---|
| HT1 | none | none | none |
| HT2 | 500°C | 550°C | 500°C |

Under the conditions indicated in Table 5, the ingots of the second brazing material underwent a hot rolling step until plate thickness was 150 mm. For the second brazing material, post-face milling plate thickness was set to 400 mm in cases using conditions other than those of HL8 and HL16. In the case of use of the conditions of HL8, the post-face milling plate thickness was set to 250 mm. In the case of use of the conditions of HL16, the post-face milling plate thickness was set to 245 mm. The second brazing material was rolled to a final plate thickness of 50 mm in the hot rolling step. Further, the heating time prior to the hot rolling was set to 15 h except for HL9 and HL17. The heating period prior to the hot rolling for HL9 was set to 1 hour, and the heating period prior to the hot rolling for HL17 was set to 0.5 hour.

**Table 5**

| | | Mass (t) | Heating temp. prior to hot rolling (°C) | Heating period prior to hot rolling (h) | Coolant max. flow rate (m³/min.) | Coolant total used amount (m³) | Period from hot rolling start until reaching 150 mm plate thickness (min.) | Plate thickness at start of hot rolling (mm) |
|---|---|---|---|---|---|---|---|---|
| Examples of present disclosure | HL1 | 2.0 | 450 | 15 | 5.0 | 15 | 15 | 400 |
| | HL2 | 1.5 | 450 | 15 | 5.0 | 15 | 15 | 400 |
| | HL3 | 2.0 | 400 | 15 | 5.0 | 15 | 15 | 400 |
| | HL4 | 2.0 | 550 | 15 | 5.0 | 15 | 15 | 400 |
| | HL5 | 2.0 | 450 | 15 | 10.0 | 15 | 15 | 400 |
| | HL6 | 2.0 | 450 | 15 | 5.0 | 30 | 15 | 400 |
| | HL7 | 2.0 | 450 | 15 | 5.0 | 15 | 30 | 400 |
| | HL8 | 2.0 | 450 | 15 | 5.0 | 15 | 15 | 250 |
| | HL9 | 2.0 | 450 | 1 | 5.0 | 15 | 15 | 250 |
| Comparative examples | HL10 | 1.45 | 450 | 15 | 5.0 | 15 | 15 | 400 |
| | HL11 | 2.0 | 390 | 15 | 5.0 | 15 | 15 | 400 |
| | HL12 | 2.0 | 560 | 15 | 5.0 | 15 | 15 | 400 |
| | HL13 | 2.0 | 450 | 15 | 10.5 | 15 | 15 | 400 |
| | HL14 | 2.0 | 450 | 15 | 5.0 | 31 | 15 | 400 |
| | HL15 | 2.0 | 450 | 15 | 5.0 | 15 | 35 | 400 |
| | HL16 | 2.0 | 450 | 15 | 5.0 | 15 | 15 | 245 |
| | HL17 | 2.0 | 450 | 0.5 | 5.0 | 15 | 15 | 400 |

These alloys were used, the hot rolled plate of the first brazing material alloy indicated in Table 1 was combined with one surface of the ingot of the core material alloy indicated in Table 2, and the hot rolled plate of the second brazing material alloy indicated in Table 3 was combined with the other surface. The cladding rate for both the first brazing material and the second brazing material was 10%. Under conditions of 450°C temperature for 3 h, these combined materials were treated in a heating stage prior to rolling, and then in the hot clad rolling step, 3-layer clad material was produced at a thickness of 3.5 mm. This 3-layer clad material underwent a processing step that combined the cold rolling and annealing indicated in Table 6, and brazing sheet test samples were produced at 0.4 mm final plate thickness and O tempering, H1n tempering, or H2n tempering. When the aforementioned manufacturing step was problem-free and manufacturability made possible rolling down to the final plate thickness of 0.4 mm, manufacturability was taken to be "P". When slab melting or cracking during rolling or casting occurred and rolling was not possible to a final plate thickness of 0.4 mm, manufacturability was taken to be "NG". Results are indicated in Tables 7 to 14.

**Table 6**

| | Cold rolling |
|---|---|
| CL1 | cold rolling to annealing (400°C) |
| CL2 | cold rolling to annealing (400°C) to cold rolling |
| CL3 | cold rolling to annealing (400°C) to cold rolling to annealing (200°C) |

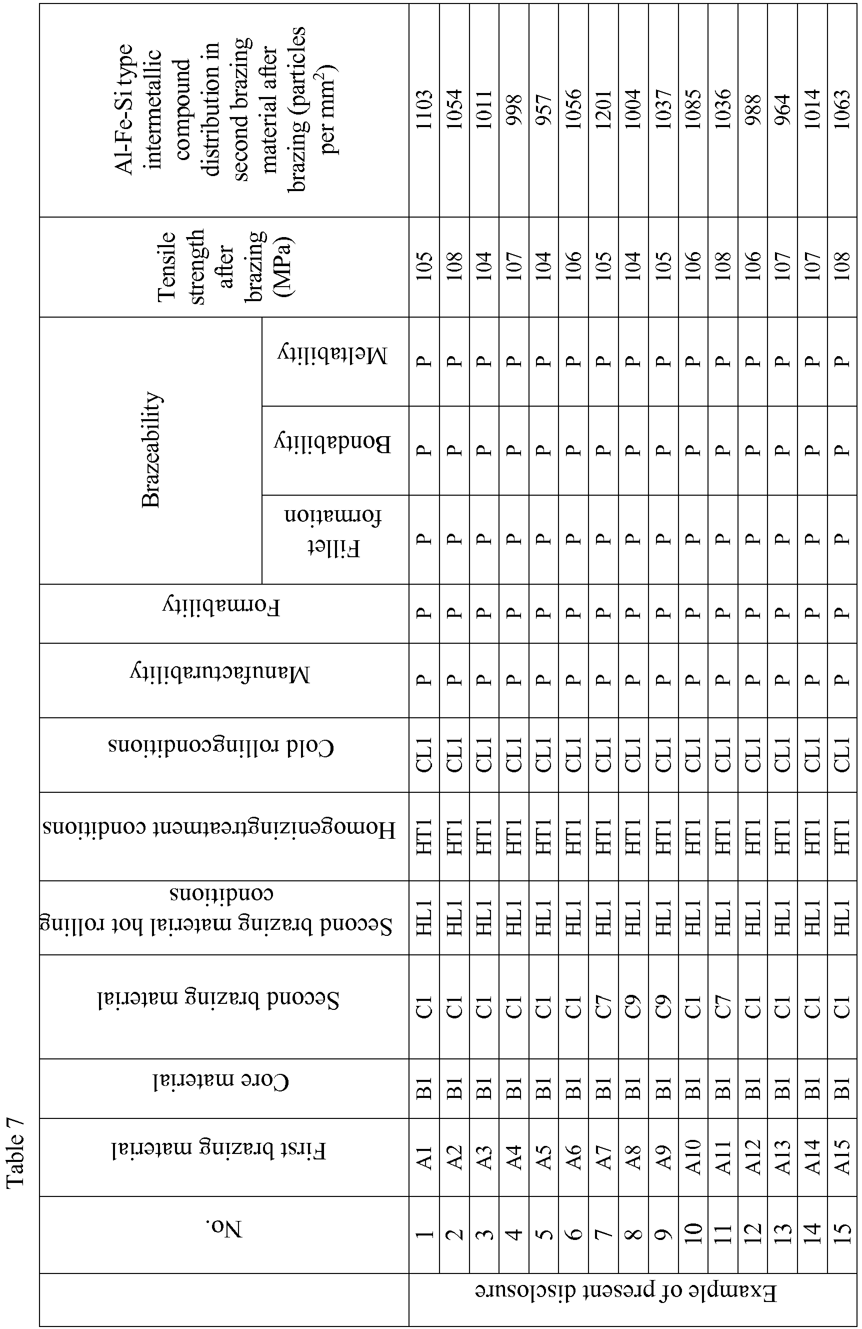

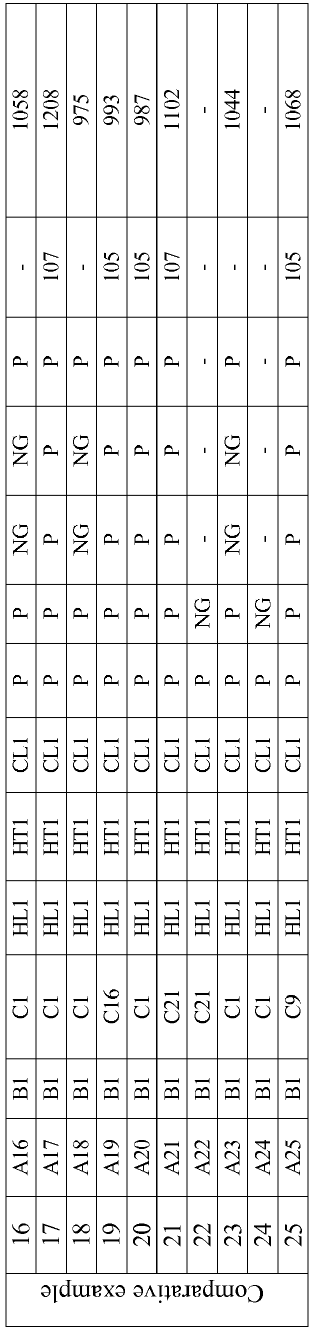

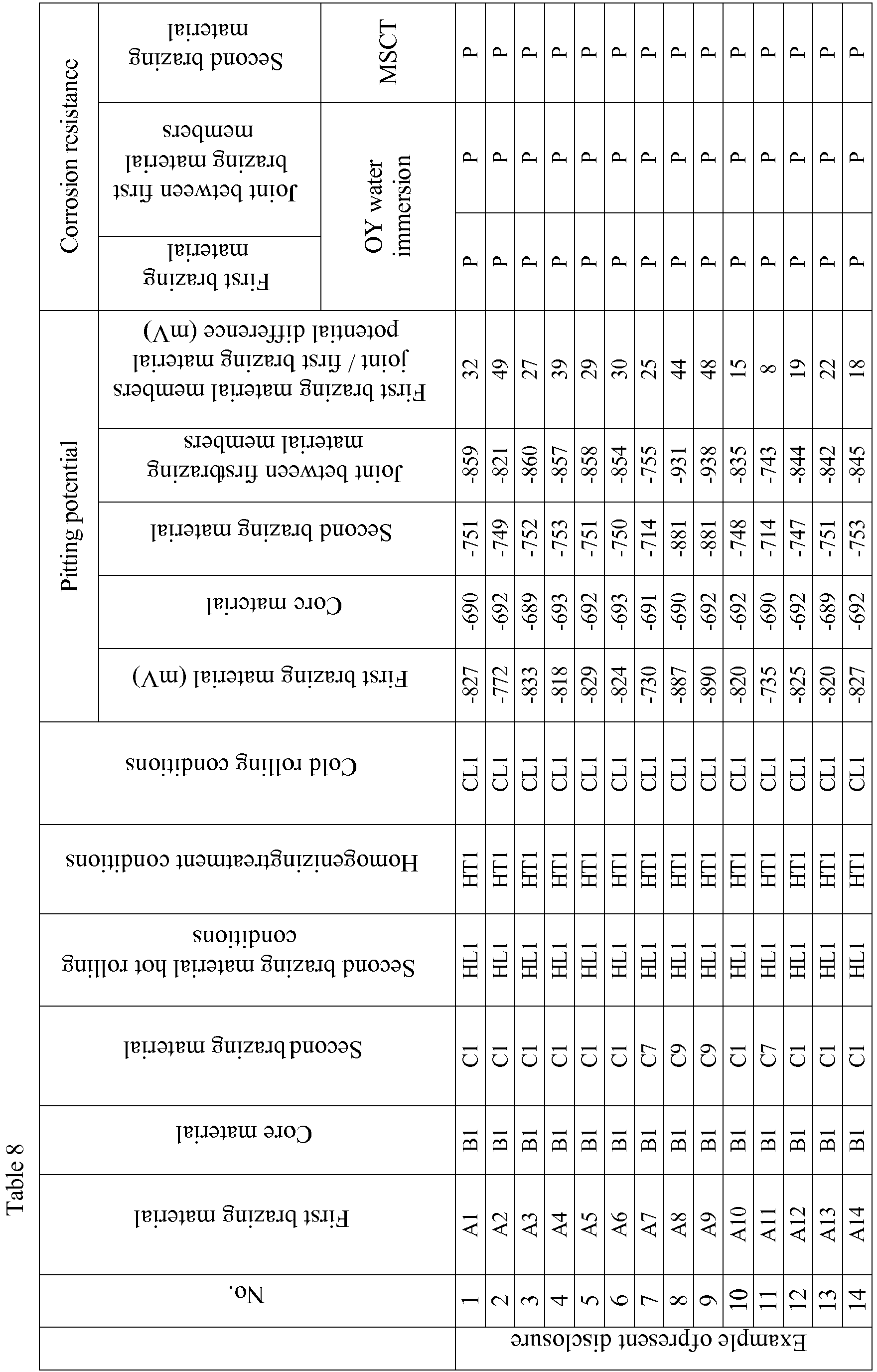

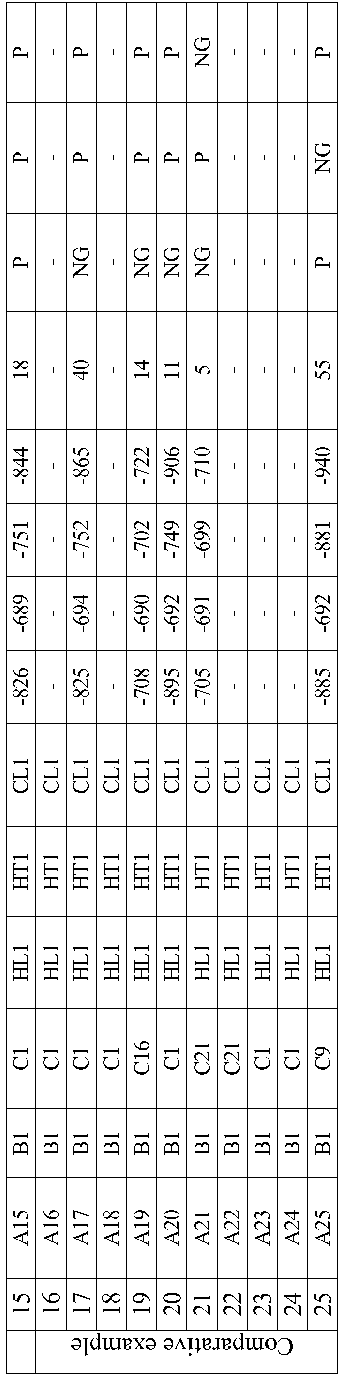

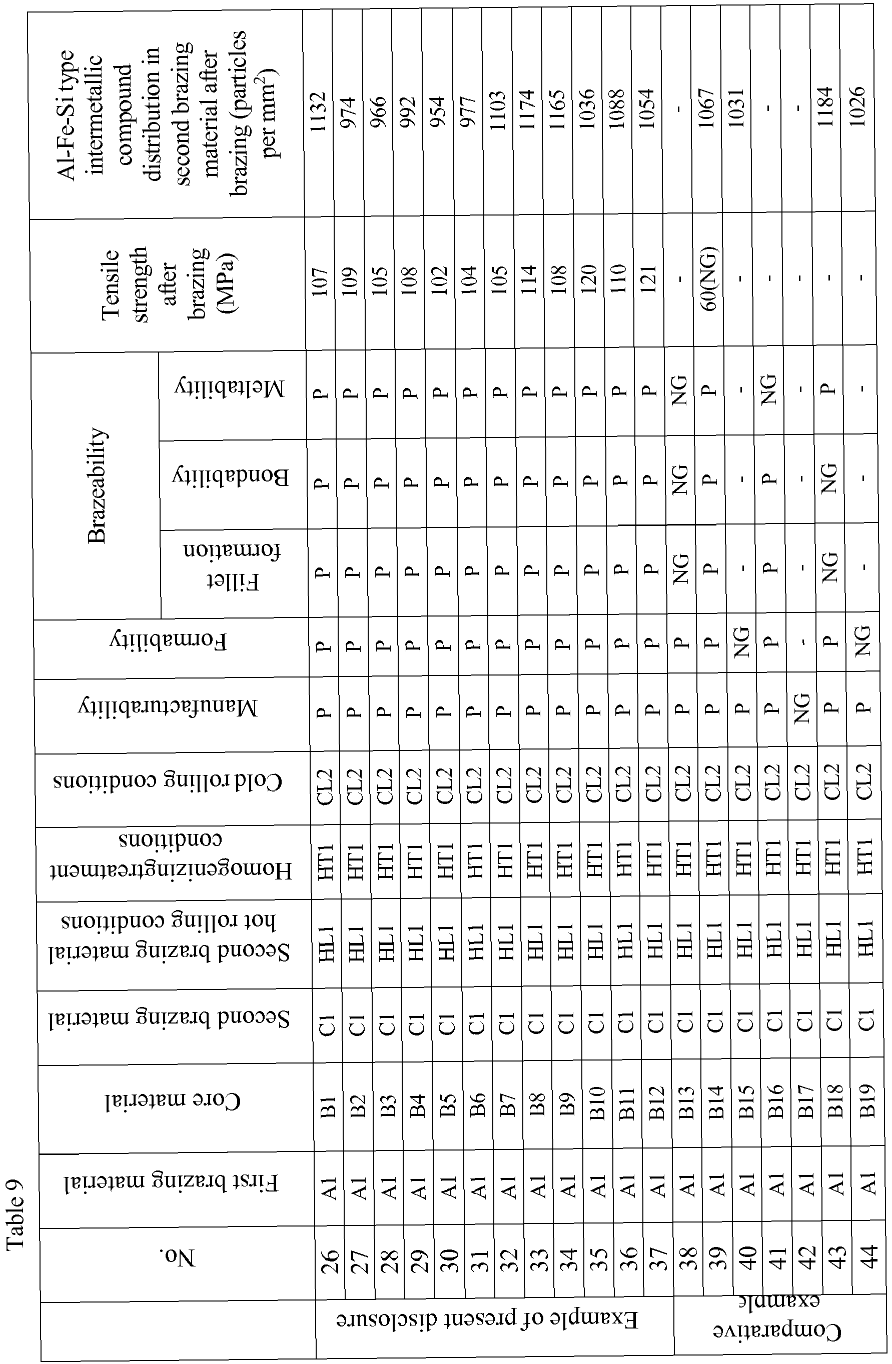

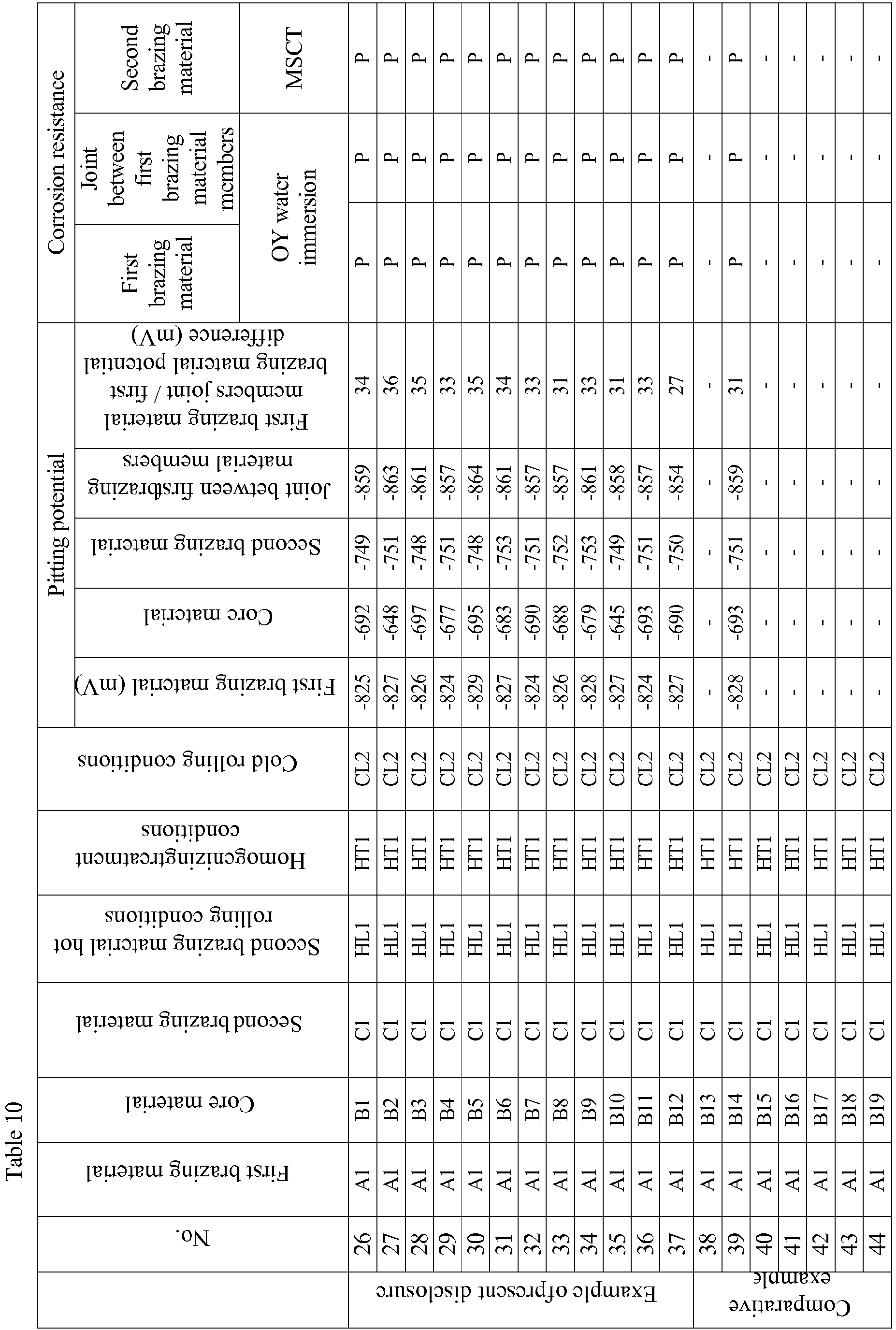

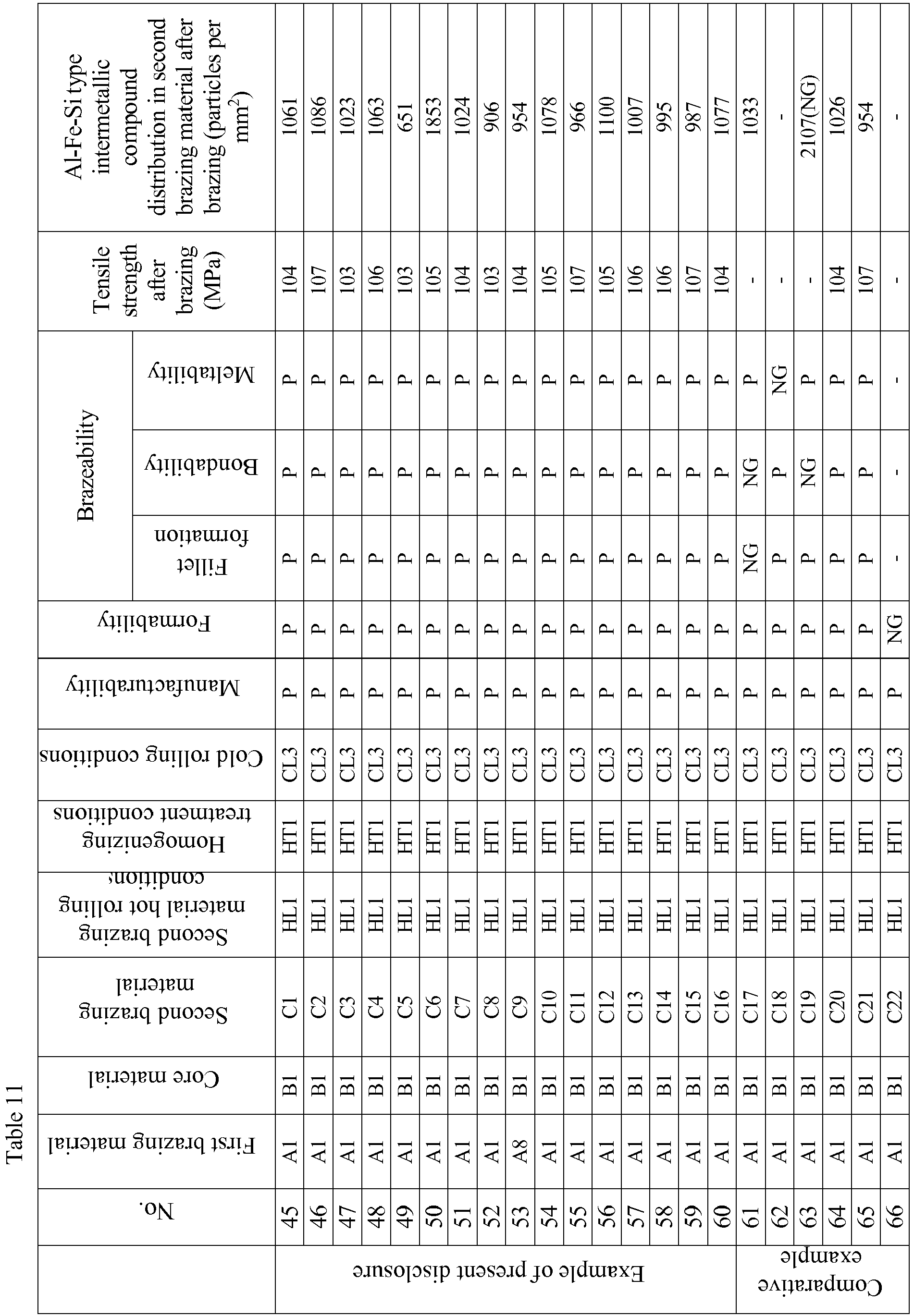

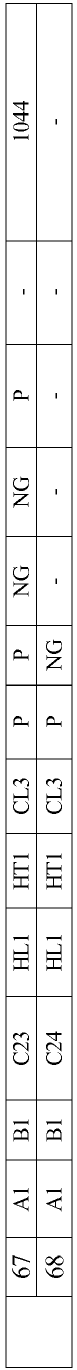

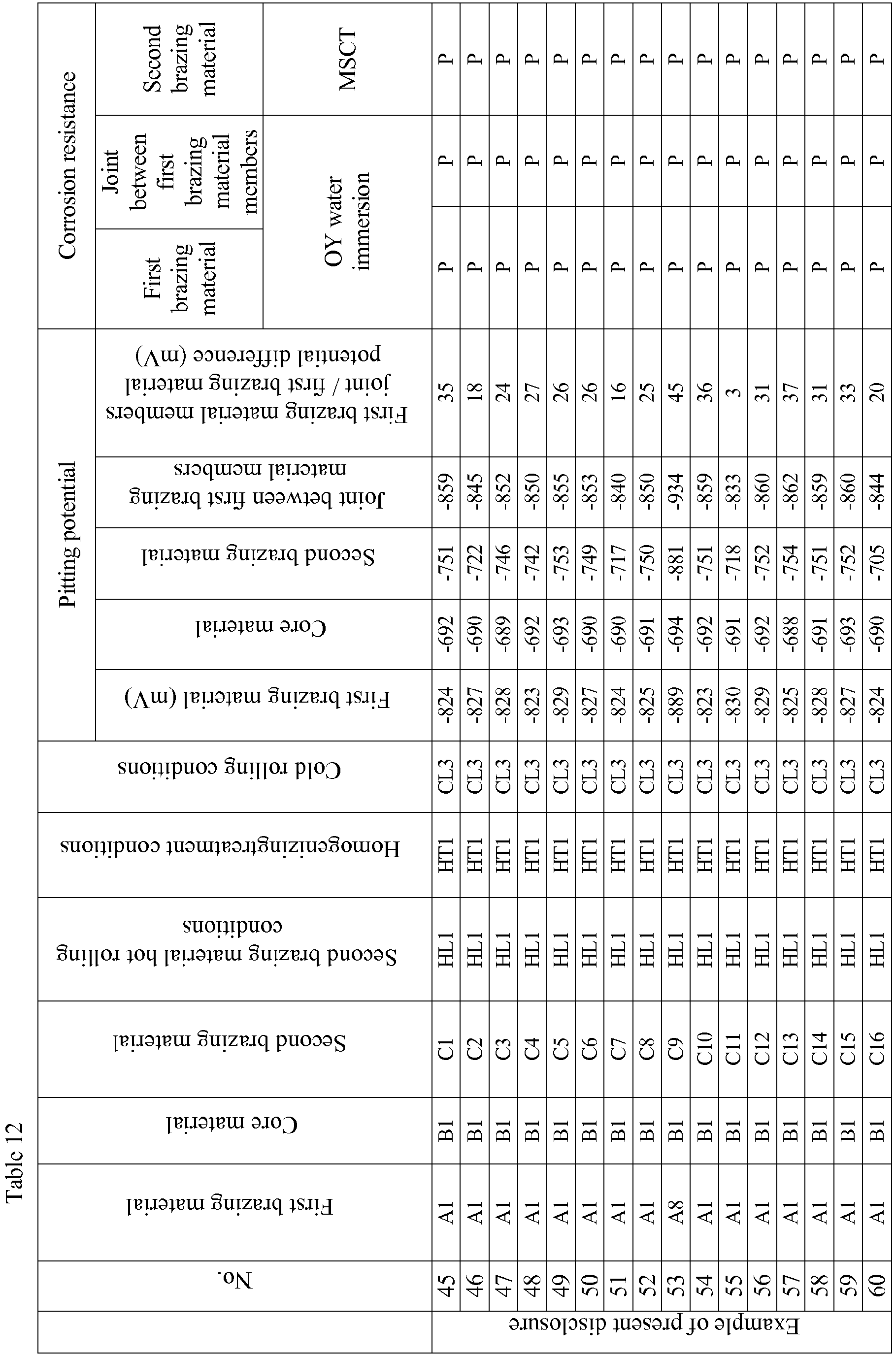

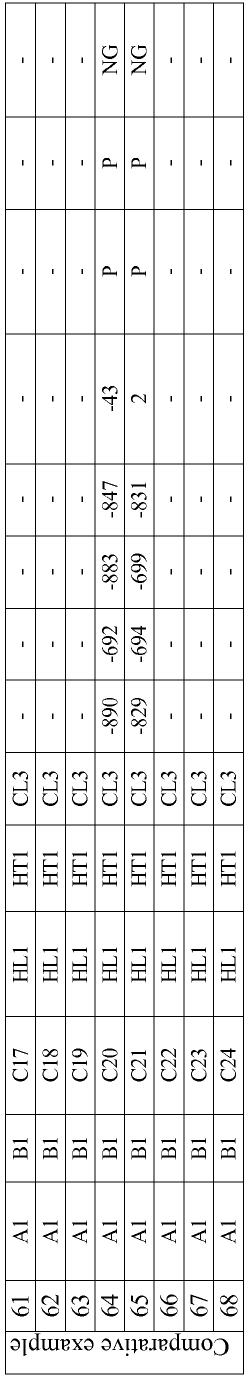

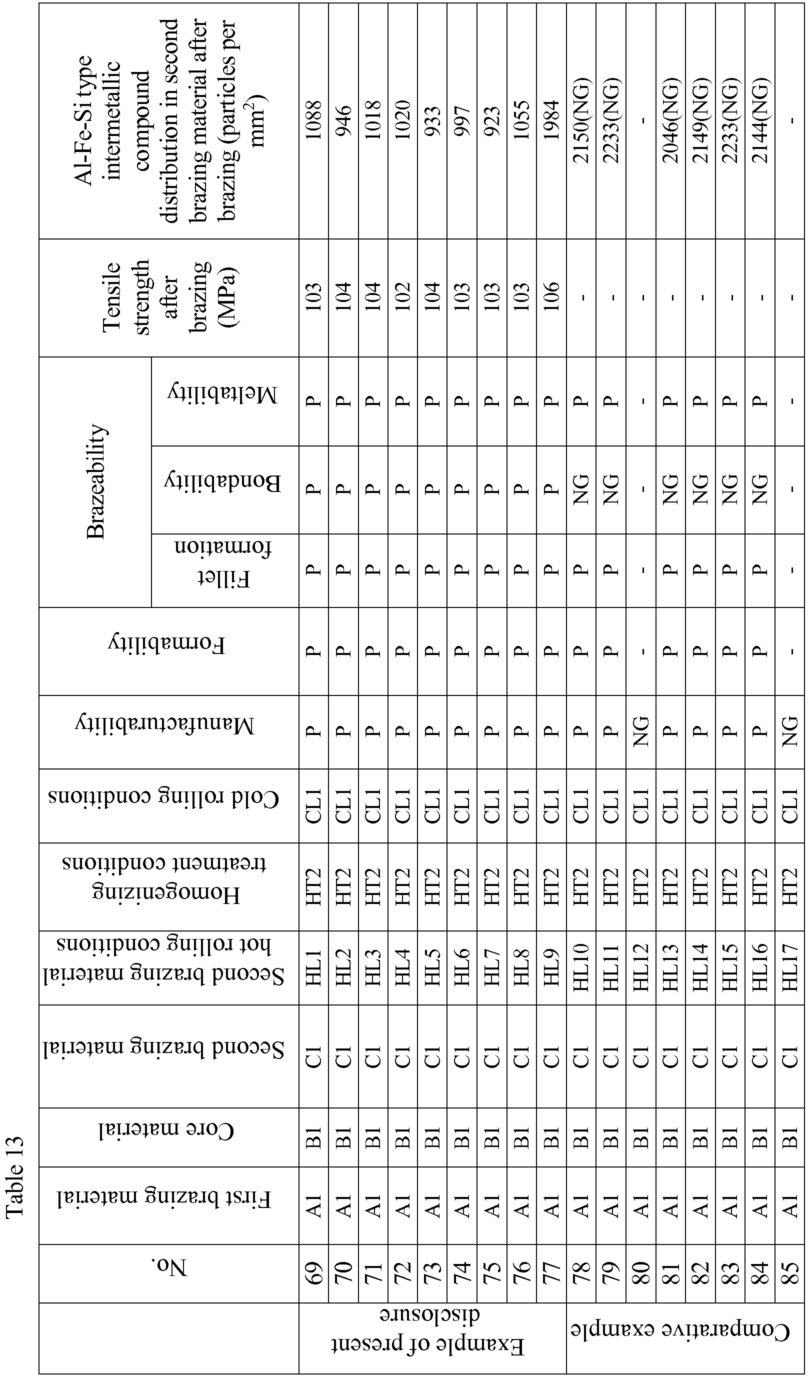

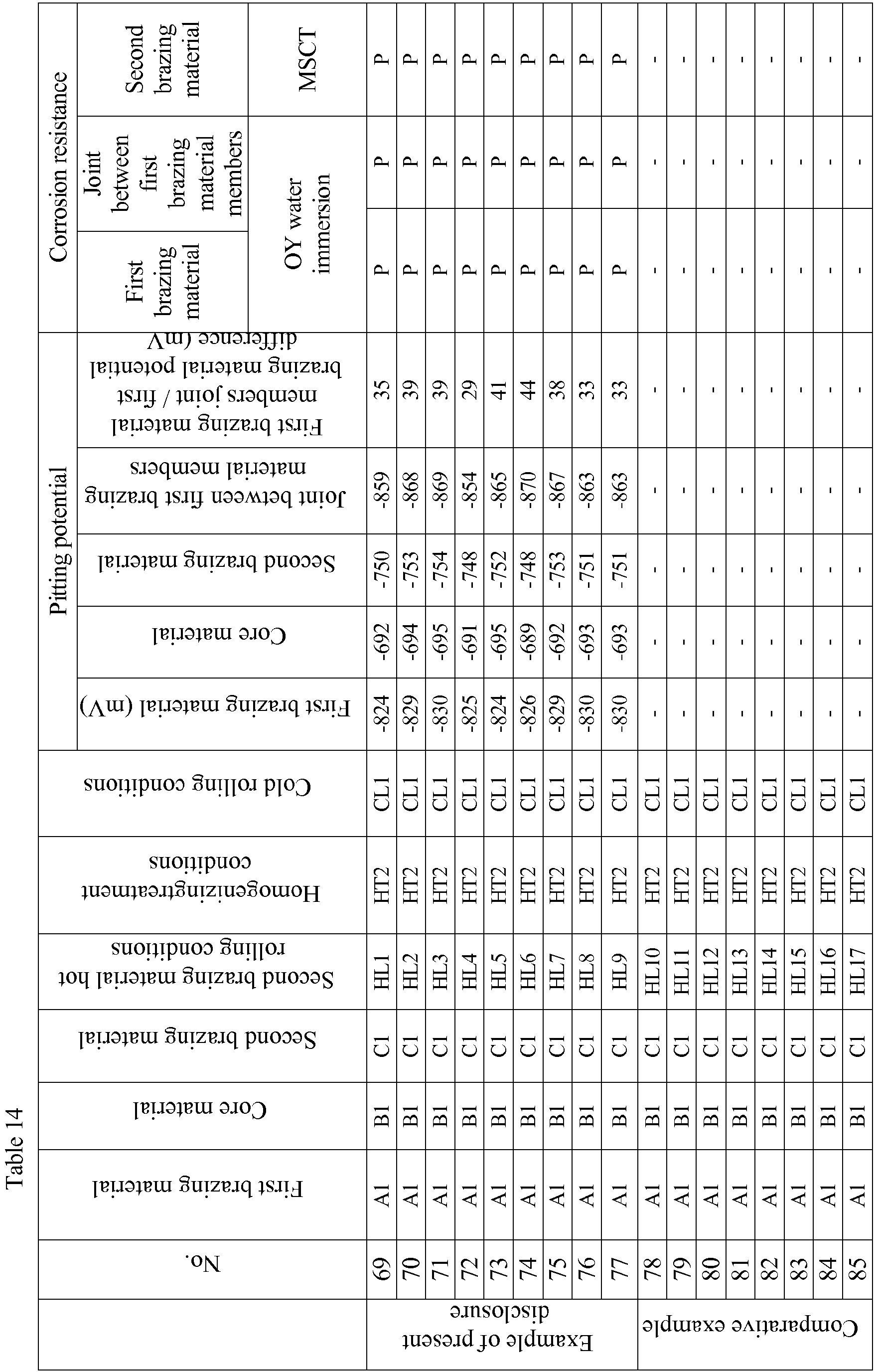

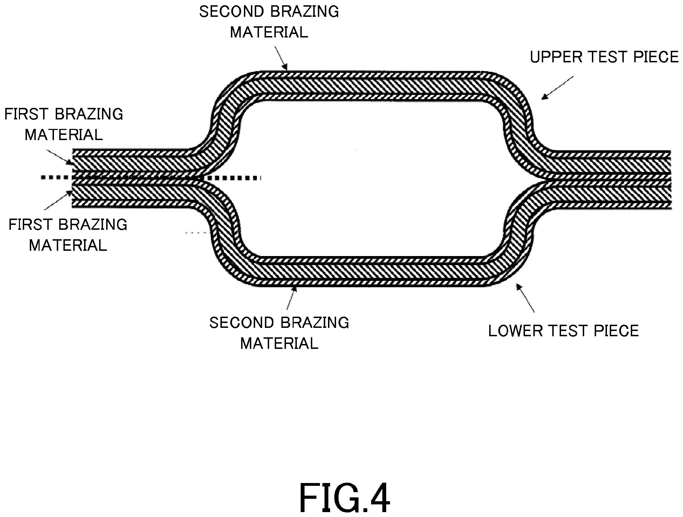

The aforementioned brazing sheet samples were pressed against each of the test pieces of FIG. 4 at the top side and bottom side. If pressing to the test piece was possible, formability was rated as "P"; and if cracking occurred during processing so that processing was not possible, formability was rated as "NG". These results are indicated in Tables 7 to 14. Further, samples that had failed ("NG") manufacturability in Tables 7 to 14 could not be evaluated further, and thus evaluations for further properties were omitted.

Each of the aforementioned test pieces was stacked against the first brazing material surfaces as illustrated in FIG. 4, so that the second brazing material was outside, a 5% fluoride flux aqueous solution was applied to the overlapping portions of the first brazing material members, and the assembly was dried. Further, length of the overlapping portion was 5 mm. Next, the entire dried brazing sheet sample was covered by stainless foil, and was brazed by heating for 5 minutes at 600°C to produce an assembly material sample. If a fillet was formed after brazing, fillet formation was taken to have passed ("P"); and if a fillet was not formed after brazing, fillet formation was taken to have failed ("NG"). These results are illustrated in Tables 7 to 14. In the same manner, if length of the void formed at the joined portion after brazing was less than 20%, bondability was determined to pass ("P"); and if the length of the void formed at the joined portion after brazing was at least 20%, bondability was determined to fail ("NG"). These results are illustrated in Tables 7 to 14. If the core material and fin component did not melt during brazing, meltability was determined to have passed ("P"); and if the core material or fin component melted during brazing, meltability was determined to have failed ("NG"). These results are indicated in Tables 7 to 14. For samples rated "NG" in Tables 7 to 14 for any one of fillet formation, bondability, or meltability, the other evaluations were omitted due to some evaluations not being possible.

Count Density of Al-Fe-Si Type Compounds in Second Brazing Material after Brazing

The count density of the Al-Fe-Si type compound having an equivalent circle diameter of 0.5 to 80.0 µm distributed in the second brazing material after brazing was observed by EPMA of a cross section of a brazing sheet sample after heat treatment (corresponding to brazing) for 5 minutes at 600°C. Three locations were freely selected for measurement, and the average value of the measurement values for each measurement location was used as the count density. Further, the count density of the Al-Fe-Si type compound in the second brazing material prior to brazing was confirmed to hardly change after brazing. Results are indicated in Tables 7 to 14.

### Measurement of Tensile Strength after Brazing

After heat treatment (equivalent to brazing) for 5 minutes at 600°C, the brazing sheet sample was used for tensile testing based on JIS Z2241 under conditions of 10 mm tensile speed and 50 mm gauge length. The tensile strength was read from the obtained stress-strain plot. The sample was determined to have passed if the resultant tensile strength was greater than or equal to 100 MPa, and was determined to have failed if the tensile strength was less than that value. Results are indicated in Tables 7 to 14.

### Measurement of Pitting Potential

NaCl was dissolved in purified water to prepare a 5 wt.% NaCl aqueous solution, and acetic acid was added to make an aqueous solution of pH 3 for use as the measurement solution for potential.

The assembly material sample was immersed in this measurement solution, and pitting potential was measured for the core material, the first brazing material surface, the second brazing material surface, and the joined portion between the first brazing material surfaces. Further, the joined portion was face milled by grinding until a cross section was formed showing the dotted-line portion of FIG. 4. Ag/Ag/Cl (s) was used as the reference electrode. For each of the measurements, an insulating resin was used to mask the non-measured locations so that only the location subject to measurement was exposed. The pitting potentials obtained in this manner, as well as the difference between the pitting potential of the joint between first brazing material members and the pitting potential of the first brazing material surface, are indicated in Tables 7 to 14. Further, the "difference between the pitting potential of the joint between first brazing material members and the pitting potential of the first brazing material surface" is the value obtained by subtracting the pitting potential occurring at the joined portion of the first brazing material surfaces from the pitting potential of the first brazing material surface. Results are indicated in Tables 7 to 14.

### Corrosion Resistance Occurring at the First Brazing Material Side

Using the assembly material sample, the second brazing material surface of the brazing sheet was masked by insulating resin, and the first brazing material surface was used as the test surface. To a solution prepared using the components and amounts indicated in Table 15, purified water was added to obtain a total of 1 L aqueous solution; the aforementioned assembly material sample underwent corrosion testing over 28 days by repeated cycles, each cycle formed by immersing the assembly material sample at 88°C in this aqueous solution, maintaining this temperature for 8 h, and then allowing cooling for 16 h. Corrosion resistance of the first brazing material surface for samples free of corrosive penetration of the brazing sheet was determined to have passed ("P"), and when corrosive penetration occurred, corrosion resistance of the first brazing material surface was determined to have failed ("NG"). With respect to the joined portion of the first brazing material members, the corrosion resistance occurring at the joined portion of the first brazing material members was determined to have passed ("P") when there was no corrosive penetration, and corrosion resistance of the joined portion of the first brazing material members was determined to have failed ("NG") when corrosive penetration occurred. Results are indicated in Tables 7 to 14.

**Table 15**

| NaCl | Na₂SO₄ | FeCl₃·6H₂O | CuCl₂·2H₂O |
|---|---|---|---|
| 0.226 | 0.089 | 0.145 | 0.0026 |

### Corrosion Resistance at Second Brazing Material Side

Using the assembly material sample, first brazing material of the brazing sheet and the joined portion of the first brazing material members were masked by insulating resin, and the second brazing material surface was used as the test surface. To a solution prepared using the components and amounts indicated in Table 16, purified water was added to obtain a total of 1 L aqueous solution at 88°C, and the aqueous solution was used for cyclic corrosion testing. Specifically, in a 100% relative humidity atmosphere at 50°C temperature, 760 h of cyclic testing was performed, each cycle being performed by spraying the aforementioned aqueous solution for 1.5 h (1-2 mL/h < 80 cm²/h>) on the sample, drying for 1 hour in a 10 to 30% relative humidity atmosphere at 50°C temperature, and further maintaining the sample for 30 minutes in a 95% relative humidity atmosphere at 50°C temperature. The corrosion resistance of the second brazing material surface was determined to have passed ("P") when there was no corrosive penetration of the brazing sheet, and corrosion resistance of second brazing material member was determined to have failed ("NG") when corrosive penetration occurred. Results are indicated in Tables 7 to 14.

**Table 16**

| CaCl₂ | Na₂SO₄ | CH₃COOH |
|---|---|---|
| 5 | 2 | adjust to pH 3 |

| | | |
|---|---|---|
| (units = g/L) | | |

In Examples 1 to 15, 26 to 37, 45 to 60, and 69 to 77 of the present disclosure, conditions specified by the present disclosure were satisfied, and manufacturability, formability, brazeability, post-brazing tensile strength, post-brazing second brazing material Al-Fe-Si type intermetallic compound count density, and corrosion resistance all were passed.

In contrast, the Si component in the first brazing material had an excessively low concentration in Comparative Example 16, and thus the filler material melt amount of the first brazing material was insufficient, brazing of the test piece was not possible, and fillet formation and bondability failed.

In Comparative Example 17, the content of the Si component of the first brazing material was excessive, and thus sacrificial layer thickness was insufficient, and corrosion resistance of the first brazing material surface failed.

In Comparative Example 18, the Fe component in the first brazing material had an excessively high concentration, and thus the filler material melt amount of the first brazing material was insufficient, brazing of the test piece was not possible, and fillet formation and bondability failed.

In Comparative Example 19, as a result of excessive Zn component in the first brazing material so that there was insufficient difference in the pitting potentials of the core material and the first brazing material surface, corrosion resistance of the first brazing material surface failed.

In Comparative Example 20, as a result of excessive Zn component in the first brazing material so that the corrosion rate was excessive, corrosion resistance of the first brazing material surface failed.

In Comparative Example 21, due to excessive Cu component in the first brazing material, the there was insufficient difference in the pitting potentials of the core material and the first brazing material surface, and corrosion resistance of the first brazing material surface failed.

In Comparative Example 22, due to excessive Mn component in the first brazing material, a large intermetallic compound was generated, and cracking occurred during press forming, so formability failed.

In Comparative Example 23, due to excessive Mg component in the first brazing material, the test piece could not be brazed, and fillet formation and bondability failed.

In Comparative Example 24, due to excessive Ti, Zr, Cr, and V components in the first brazing material, a large intermetallic compound was generated in the first brazing material, and cracking occurred during press forming, so formability failed.

In Comparative Example 25, the difference in the Zn component of the first brazing material and the Zn component of the second brazing material was less than 0.2%, and thus the Zn concentration at the joined portion was not sufficiently mitigated, and the joined portion corrosion resistance failed.

In Comparative Example 38, due to excessive Fe component in the core material, the crystal grains of the core material during brazing became fine, there was marked filler material diffusion to the core material, and fillet formation, bondability, and meltability failed.

In Comparative Example 39, the Mn component was excessively low in the core material, and thus strength declined, and post-brazing tensile strength failed.

In Comparative Example 40, the Mn component was excessively high in the core material, and thus a large intermetallic compound was generated in the core material, and cracking occurred during pressing so that formability failed.

In Comparative Example 41, the Si component was excessively high in the core material, and thus core material melting occurred during brazing, and meltability failed.

In Comparative Example 42, the Cu component was excessively high in the core material, and thus cracking occurred during casting, and manufacturability failed.

In Comparative Example 43, the Mg component was excessively high in the core material, and thus the test piece could not be brazed, and fillet formation and bondability failed.

In Comparative Example 44, due to excessive Ti, Zr, Cr, and V components in the core material, a large intermetallic compound was generated in the core material, and cracking occurred during pressing, so formability failed.

In Comparative Example 61, due to excessive Si component in the second brazing material, the filler material melt amount of the second brazing material was insufficient, the test piece could not be brazed, and fillet formation and bondability failed.

In Comparative Example 62, due to excessive Si component in the second brazing material, fin melting occurred during brazing of the test piece, and meltability failed.

In Comparative Example 63, due to excessive Fe component in the second brazing material, filler material flowability of the second brazing material declined, the test piece could not be brazed, and bondability failed.

In Comparative Example 64, due to excessive Zn component in the second brazing material, the corrosion rate was excessively high, and corrosion resistance of the second brazing material surface failed.

In Comparative Example 65, due to excessive Cu component in the second brazing material, the difference in pitting potential between the core material and the second brazing material was insufficient, and thus corrosion resistance of the second brazing material surface failed.

In Comparative Example 66, due to excessive Mn component in the second brazing material, a large intermetallic compound was generated, and cracking occurred during press forming so that formability failed.

In Comparative Example 67, due to excessive Mg component in the second brazing material, the test piece could not be brazed, and fillet formation and bondability failed.

In Comparative Example 68, due to excessive Ti, Zr, Cr, and V components in the second brazing material, a large intermetallic compound was generated in the second brazing material, and cracking occurred during press forming, so formability failed.

In Comparative Example 78, due to the excessively small mass used for hot rolling of the second brazing material, the cooling rate was high, the count of the Al-Fe-Si intermetallic compound distributed in the second brazing material was high, and bondability failed.

In Comparative Example 79, the heating temperature prior to the hot rolling of the second brazing material was excessively low, and thus the count of the Al-Fe-Si intermetallic compound distributed in the second brazing material was high, and bondability failed.

In Comparative Example 80, due to an excessive heating temperature prior to the hot rolling of the second brazing material, melting occurred in the core material, and manufacturability failed.

In Comparative Example 81, due to an excessively high flow amount of coolant, the cooling rate was high, the count of the Al-Fe-Si intermetallic compound distributed in the second brazing material was high, and bondability failed.

In Comparative Example 82, due to an excessively high total flow amount of coolant, the cooling rate was high, the count of Al-Fe-Si intermetallic compound distributed in the second brazing material was high, and bondability failed.

In Comparative Example 83, due to the rolling period from the start of hot rolling until reaching the plate thickness less than or equal to 150 mm exceeding 30 minutes, the degree of processing was insufficient, the count of the Al-Fe-Si intermetallic compound distributed in the second brazing material was high, and bondability failed.

In Comparative Example 84, due to plate thickness at the start of hot rolling being less than 250 mm, the degree of processing was insufficient, the count of the Al-Fe-Si intermetallic compound distributed in the second brazing material was high, and bondability failed.

In Comparative Example 85, due to the heating time prior to the start of hot rolling being less than 1 hour, edge cracking occurred during rolling, rolling could not be completed, and manufacturability failed.

### Industrial Applicability

The present disclosure can provide an aluminum alloy brazing sheet for use in a flow channel shaped component of a heat exchanger in which, for example, the inner surface or both the inner surface and outer surface of the flow channel shaped component are in a corrosive environment, and prevention of sacrificial corrosion by fins at the joint surface with the fins is difficult. This type of aluminum alloy brazing sheet is equipped with a sacrificial anode effect at both the inner and outer surfaces of the flow channel shaped component, one surface of the aluminum alloy brazing sheet has a brazing function, preferential corrosion at the joined portion of first brazing material members of the plate edge portion can be further suppressed, and erosion resistance, brazeability such as a fin joint ratio, light weight, and heat conductivity are excellent. Further, a flow channel shaped component is provided for the automotive heat exchanger using this type of aluminum alloy brazing sheet.

## Claims

1. An aluminum alloy brazing sheet comprising:
a core material comprising an aluminum alloy;
a first brazing material clad to one surface of the core material; and
a second brazing material clad to another surface of the core material, wherein
the aluminum alloy of the core material comprises 0.05 to 1.50 mass% Fe and 0.30 to 2.00 mass% Mn, with a balance consisting of Al and inevitable impurities;
the first brazing material comprises an aluminum alloy comprising 1.50 to 4.00 mass% Si, 0.05 to 1.50 mass% Fe, and 1.00 to 6.00 mass% Zn, with a balance consisting of Al and inevitable impurities, the first brazing material having a sacrificial anode effect and a brazing function;
the second brazing material comprises an aluminum alloy comprising 4.00 to 13.00 mass% Si and 0.05 to 1.00 mass% Fe, with a balance consisting of Al and inevitable impurities, the second brazing material having a sacrificial anode effect and a brazing function; and
a count of an Al-Si-Fe intermetallic compound having an equivalent circle diameter of 0.5 to 80.0 µm in the second brazing material is less than or equal to 2,000 particles per mm².

2. The aluminum alloy brazing sheet according to claim 1, wherein
the aluminum alloy of the core material further comprises at least one selected from 0.01 to 1.50 mass% Si, 0.03 to 2.00 mass% Cu, 0.01 to 0.50 mass% Mg, 0.05 to 0.30 mass% Ti, 0.05 to 0.30 mass% Zr, 0.05 to 0.30 mass% Cr, and 0.05 to 0.30 mass% V.

3. The aluminum alloy brazing sheet according to claim 1 or 2, wherein
the aluminum alloy of the first brazing material further comprises at least one selected from 0.05 to 0.50 mass% Cu, 0.05 to 1.50 mass% Mn, 0.01 to 0.50 mass% Mg, 0.05 to 0.30 mass% Ti, 0.05 to 0.30 mass% Zr, 0.05 to 0.30 mass% Cr, and 0.05 to 0.30 mass% V.

4. The aluminum alloy brazing sheet according to any one of claims 1 to 3, wherein the aluminum alloy of the first brazing material further comprises one type or type types selected from among 0.001 to 0.050 mass% Na and 0.001 to 0.050 mass% Sr.

5. The aluminum alloy brazing sheet according to any one of claims 1 to 4, wherein the aluminum alloy of the second brazing material further comprises at least one selected from:
0.50 to 5.00 mass% Zn, the content of Zn being at least 0.20 mass% lower than the content of Zn in the first blazing material,
0.05 to 0.50 mass% Cu,
0.05 to 1.50 mass% Mn,
0.01 to 0.50 mass% Mg,
0.05 to 0.30 mass% Ti,
0.05 to 0.30 mass% Zr,
0.05 to 0.30 mass% Cr, and
0.05 to 0.30 mass% V.

6. The aluminum alloy brazing sheet according to any one of claims 1 to 5, wherein the aluminum alloy of the second brazing material further comprises one type or two types selected from 0.001 to 0.050 mass% Na and 0.001 to 0.050 mass% Sr.

7. The aluminum alloy brazing sheet according to any one of claims 1 to 6, wherein the count of the Al-Si-Fe intermetallic compound having an equivalent circle diameter of 0.5 to 80.0 µm in the second brazing material is less than or equal to 1,000 particles per mm².

8. A method of manufacture of the aluminum alloy brazing sheet according to any one of claims 1 to 7, the method comprising:
a casting step of casting the aluminum alloy for use in the core material, casting the aluminum alloy for use in the first brazing material, and casting the aluminum alloy for use in the second brazing material;
a hot rolling step of hot rolling a cast ingot of the first brazing material to a prescribed thickness thereof, and hot rolling a cast ingot of the second brazing material to a prescribed thickness thereof;
a cladding step of cladding the first brazing material having the prescribed thickness thereof by hot rolling to one face of a core material ingot, and cladding of the second brazing material having the prescribed thickness thereof by hot rolling to another face of the core material ingot;
a hot clad rolling step of hot rolling a clad material;
a cold rolling step of cold rolling the hot clad-rolled clad material; and
an annealing step of annealing the clad material at least once, a time of the annealing being in at least one of (i) during the cold rolling step, or (ii) after the cold rolling step, wherein
in the hot rolling step of the second brazing material, a mass of the ingot of the second brazing material occurring prior to the hot rolling step is greater than or equal to 1.5 t, a plate thickness is greater than or equal to 250 mm, a heating temperature of the ingot of the second brazing material occurring prior to the hot rolling step is 400 to 550°C, and a heating time is 1 to 30 h, and
a maximum flow rate of a coolant is set less than or equal to 10 m³/minute, and a utilized total amount of the coolant is set less than or equal to 30 m³, so that the plate thickness of the second brazing material occurring within 30 minutes of a start of the hot rolling step is less than or equal to 150 mm.

9. A method of manufacture of an automotive heat exchanger, comprising:
brazing to join together members of the first brazing material of the aluminum alloy brazing sheet according to any one of claims 1 to 7, and causing a molten filler material of the second brazing material to flow to a joined position of the members of the first brazing material during the brazing, wherein
the first brazing material and the second brazing material both have brazing performance, and one or both of the first brazing material and the second brazing material has a sacrificial anode effect, so that the second brazing material supplements an insufficiency of the filler material during the brazing of the members of the first brazing material, and simultaneously, a content of Zn occurring at the joined portion of the members of the first brazing material is diluted.
